# EUROPEAN PATENT SPECIFICATION

(11) **EP 3 313 549 B1**
(45) Date of publication and mention of the grant of the patent: **17.03.2021**
(21) Application number: 16733943.1
(22) Date of filing: 29.06.2016
(51) Int. Cl.: B01D 39/16, B01D 39/20

(54) **FILTER MEDIA AND METHODS OF PRODUCING THE SAME**
FILTERMEDIUM UND HERSTELLUNGSVERFAHREN
MILIEU FILTRANT ET PROCÉDÉS DE PRODUCTION CORRESPONDANTS

(30) Priority: 29.06.2015 US 201514753533
(43) Date of publication of application: 02.05.2018
(73) Proprietor: Mann+Hummel GmbH, 71636 Ludwigsburg (DE)
(72) Inventor: AMIRNASR, Elham, Durham, North Carolina 27703 (US)
(74) Representative: Seyboth, Matthias
(86) International application number: PCT/EP2016/065105
(87) International publication number: WO 2017/001457

(56) References cited:
- WO-A1-00/29657
- WO-A2-02/18693
- US-A1- 2003 166 370
- US-A1- 2007 207 317
- US-A1- 2009 042 475

## Description

### TECHNICAL FIELD

The present invention relates to filter medium comprising a splittable multicomponent fiber and a monocomponent fiber and methods of producing the filter medium, which can be used for filtering particles from fluids, such as gases and liquids.

### BACKGROUND

Filtration media for use in filter structures is needed for removing various particulate materials from fluid streams, such as gas streams and liquids. The gas streams can include air, and the liquids can be aqueous and non-aqueous, such as oil and/or fuel. For example, automotive vehicles require filtration of air, fuel and oil. Filtration media can comprise various materials, such as natural, synthetic, metallic and glass fibers. Further, a wide range of constructions can be used in forming filter media, including woven, knit and non-woven constructions.

There is a need for filter media which has both high filter efficiency and high fluid throughput. In other words, filter media must have the ability to prevent fine particles from passing through the filter media while also having a low fluid flow resistance. Typically, filter media prevents fine particles from passing through the filter media by mechanically trapping the particles within the fibrous structure of the filter media. Alternatively, some filter media can be electrostatically charged, which also allows for electrostatic attraction between the filter media and fine particles. Flow resistance is measured by pressure drop or pressure differential across the filter material. A high pressure drop indicates a high resistance to the fluid flow through the filter media, and a low pressure drop indicates a low fluid flow resistance. However, high efficiency and low pressure drop for filter media are generally inversely correlated. Typically, increasing the particle capture efficiency by increasing the surface area of the filtration media also increases the pressure drop across the filtration media. Furthermore, filter media with a high pressure drop results in increased energy costs due to the increased energy required to move fluid through the filter media. Thus, there is a need in the art for a filtration media which has high filtration efficiency, low pressure drop across the filtration media and a long service life.

It is known to incorporate nanofibers into filter media for filtering of smaller particles. Additionally, nanofibers can be incorporated with coarse fibers, where the coarse fibers can filter larger particles. For example, U.S. Publication No. 2011/10114554 reports filter media comprising a first coarse layer, a second nanofiber layer and a third nanofiber layer, where the first and/or third layer may comprise a multicomponent fiber. Also, U.S. Patent Publication No. 2005/0026526 reports a filter media having nanofibers with a diameter less than 1 µm incorporated with coarse fibers having a diameter greater than 1 µm, where the nanofibers can be formed from a bicomponent fiber, such as by removing the other component by, for example, heating or dissolving the other component.

While nanofibers can have high efficiency, nanofibers can also cause a high pressure drop. Further, nanofibers can have low dust holding capacity. Therefore, there is a need to provide additional filter media with high efficiency and a lower pressure drop

US 2009/042475 A1 discloses a mixed filament spunbond fabric comprising a first fiber type and a second fiber type, the first fiber type comprising a continuous segmented, bicomponent fiber having a cross-section such that each individual segment has a size of less than about 2 µm or comprising an island-in-the-sea bicomponent fiber having a cross-section such that each individual island has a size of less than about 1 µm, the second fiber type comprising a monocomponent fiber having a size greater than about 2 µm, preferably greater than 5 µm. The nonwoven materials are suitable for filtration.

### SUMMARY

It has been found that filter media with high efficiency and lower pressure drop can be achieved by providing filter media comprising a splittable multicomponent fiber present in split form as least a first split component and a second split component and a monocomponent fiber.

The present invention provides a filter medium according to claim 1.

The present invention also provides a method of preparing said filter medium according to claim 10. as described herein comprising: blending the splittable multicomponent fiber with the monocomponent fiber; and mechanically splitting the splittable multicomponent fiber into the first split component and the second split component.

Other embodiments, including particular aspects of the embodiments summarized above, will be evident from the detailed description that follows.

### BRIEF DESCRIPTION OF THE DRAWINGS

Figures 1a, 1b are schematic drawings illustrating a cross-section view of a bicomponent fiber having a side-by-side configuration.
Figure 2 is a schematic drawing illustrating a cross-sectional view of a bicomponent fiber having an islands-in-the-sea configuration.
Figure 3 is a scanning electron microscope (SEM) image of a bicomponent fiber having an islands-in-the-sea configuration.
Figures 4a, 4b are schematic drawings illustrating a cross-sectional view of a bicomponent fiber having a segmented pie configuration or wedge configuration.
Figure 5 is a schematic drawing illustrating a cross-sectional view of a bicomponent fiber having a segmented cross configuration.
Figure 6 is a schematic drawing illustrating a cross-sectional view of a bicomponent fiber having a tipped trilobal configuration.
Figures 7a, 7b are schematic drawings illustrating a cross-section view of a bicomponent fiber having a sheath-core configuration.
Figure 8 is a SEM image of a mixture of a multicomponent fiber in both split form and not split form and a monocomponent fiber.
Figure 9 is a graph illustrating differential pressure versus (vs.) time during the oil filter testing for Flat Sheet#1.
Figure 10 is a graph illustrating filter efficiency vs. time for each particle size during the oil filter testing for Flat Sheet#1.
Figure 11 is a graph illustrating average filter efficiency vs. particle size during the oil filter testing for Flat Sheet#1.
Figure 12 is a graph illustrating the differential pressure vs time during the oil filter testing for Flat Sheet#4.
Figure 13 is a graph illustrating filter efficiency vs. time for each particle size during the oil filter testing for Flat Sheet#4.
Figure 14 is a graph illustrating average filter efficiency vs. particle size during the oil filter testing for Flat Sheet#4.
Figure 15 is a graph illustrating differential pressure vs. time during the oil filter testing for Flat Sheet#5.
Figure 16 is a graph illustrating filter efficiency vs. time for each particle size during the oil filter testing for Flat Sheet#5.
Figure 17 is a graph illustrating average filter efficiency vs. particle size during the oil filter testing for Flat Sheet#5.

### DETAILED DESCRIPTION

In various aspects of the invention, filter media and methods of preparing and using the filter media are provided.

### I. Definitions

To facilitate an understanding of the present invention, a number of terms and phrases are defined below.

As used in the present disclosure and claims, the singular forms "a", "an", and "the" include plural forms unless the context clearly dictates otherwise.

Wherever embodiments are described herein with the language "comprising", otherwise analogous embodiments described in terms of "consisting of" and/or "consisting essentially of" are also provided.

The term "and/or" as used in a phrase such as "A and/or B" herein is intended to include "A and B", "A or B", "A", and "B".

The terms "filter medium", "filter media", "filtration media", or "filtration medium" may be used interchangeably.

As used herein, the term "fiber" refers to both fibers of finite length, such as conventional staple fibers, as well as substantially continuous structures, such as continuous filaments, unless otherwise indicated. The fibers can be hollow or non-hollow fibers, and further can have a substantially round or circular cross section or non-circular cross sections (for example, oval, rectangular, multi-lobed, *etc*.). The fibers may be meltspun or solution spun. The fibers may also be spunbonded or meltblown and form nonwoven webs.

As used herein, the term "nanofiber" refers to a fiber having an average diameter of about 1 µm or less.

As used herein, the term "microfiber" refers to a fiber having an average diameter not greater than about 75 µm, for example, having an average diameter of from about 1 µm to about 75 µm, or more particularly, microfibers may have an average diameter of from about 1 µm to about 30 µm. Another frequently used expression of fiber diameter is denier, which is defined as grams per 9000 meters of a fiber. For a fiber having circular cross-section, denier may be calculated as fiber diameter in microns squared, multiplied by the density in grams/cc, multiplied by 0.00707. A lower denier indicates a finer fiber and a higher denier indicates a thicker or heavier fiber. For example, the diameter of a polypropylene fiber given as 15 µm may be converted to denier by squaring, multiplying the result by 0.89 g/cc and multiplying by 0.00707. Thus, a 15 µm polypropylene fiber has a denier of about 1.42 (15²×0.89×0.00707=1.415).

As used herein, the term "meltspun fibers" refers to fibers which are formed from a molten material, such as a polymer, by a fiber-forming extrusion process.

As used herein, the term "spunbonded fibers" refers to small diameter fibers which are formed by extruding molten thermoplastic material as filaments from a plurality of fine capillaries of spinnerets having a circular or other configuration, with the diameter of the extruded filaments then being rapidly reduced. Spunbond fibers are quenched and generally not tacky when they are deposited onto a collecting surface. Spunbond fibers are generally continuous and often have average diameters larger than about 7 microns, more particularly, between about 10 and 30 microns.

As used herein, the term "meltblown fibers" refers to fibers formed by extruding a molten thermosplastic material through a plurality of fine, usually circular, die capillaries as molten threads or filaments into converging high velocity heated gas (*e.g.,* air) streams which attenuate the filaments of molten thermosplastic material to reduce their diameter, which may be to microfiber diameter or a nanofiber diameter. Thereafter, the meltblown fibers are carried by the high velocity gas stream and are deposited on a collecting surface to form a web of randomly dispersed meltblown fibers. Meltblown fibers are microfibers may be continuous or discontinuous fibers, and are generally smaller than 10 µm in diameter, and are generally self bonding when deposited onto a collecting surface.

As used herein, the term "substantially continuous filaments or fibers" refers to filaments or fibers prepared by extrusion from a spinnerets, including without limitation spunbonded and meltblown fibers, which are not cut from their original length prior to being formed into a nonwoven web or fabric. Substantially continuous filaments or fibers may have average lengths ranging from greater than about 15 cm to more than one meter, and up to the length of the web or fabric being formed. "Substantially continuous filaments or fibers" include those which are not cut prior to being formed into a nonwoven web or fabric, but which are later cut when the nonwoven web or fabric is cut.

As used herein, the term "staple fiber" refers to a fiber which is natural or cut from a manufactured filament prior to forming into a web, and which can have an average length ranging from about 0.1-15 cm, particularly about 0.2-7 cm.

As used herein, the term "multicomponent fiber" refers to a fiber which is formed from at least two materials (*e.g.,* different polymers), or the same material with different properties or additives. The materials forming the multicomponent fiber can be extruded from separate extruders but spun together to form one fiber. Examples of a multicomponent fiber include, but are not limited to a bicomponent fiber formed from two materials or a tricomponent fiber formed from three materials. The materials are arranged in substantially constantly positioned distinct zones across the cross-section of the multicomponent fibers and extend continuously along the length of the multicomponent fibers.

As used herein, the term "splittable multicomponent fiber" refers to a multicomponent fiber, as described above, which can split lengthwise into finer fibers of the individual materials when subjected to a stimulus and thus be present in split form.

As used herein, the term "split ratio" refers to the ratio, after splitting, of split multicomponent fibers to unsplit (*i.e.,* not split) multicomponent fibers. First example, in the case of a bicomponent fiber which has been split into a split first component fiber and a split second component fiber, the split ratio is the ratio of split first component and split second component fibers to unsplit bicomponent fibers.

As used herein, the term "monocomponent fiber" refers to fiber refers to a fiber formed from one material (*e.g.,* polymer). One or more extruders may be used in forming the monocomponent fiber. This is not meant to exclude fibers formed from one polymer to which small amounts of additives have been added for color, anti-static properties, lubrication, hydrophilicity, *etc.* Such additives, *e.g.* titanium dioxide for color, are conventionally present, if at all, in an amount less than 5 weight percent and more typically about 1-2 weight percent.

As used herein, the term "nonwoven fabric" refers to a material, having internal void space and formed substantially of a plurality of entangled, interlaid and/or bonded fibers, produced by a process other than weaving or knitting. Nonwoven fabrics or webs can be formed from processes such as, for example, meltblowing processes, spunbonding processes, air laying processes, and bonded carded web processes. The basis weight of a nonwoven fabric can be expressed in ounces of material per square yard (osy) or grams per square meter (gsm). (Note that to convert from osy to gsm, multiply osy by 33.91.)

As used herein, the term "substrate" refers to any which structure upon the multicomponent fiber and/or the monocomponent fiber are carried or deposited. The substrate may comprise fiber entanglements that are bonded or secured together mechanically, chemically and/or adhesively. "Substrate" may also include looser fiber entanglements that may not be bonded together or secured together.

As used herein, the term "basis weight" refers to the weight of the filter medium in g/m² (*i.e.,* gsm) or ounces of material per square yard (osy). (To convert from osy to gsm, multiply osy by 33.91.). Basis weight is determined by ASTM D3776/D3776M - 09a (2013) (Standard Test Methods for Mass Per Unit Area (Weight) of Fabric).

### II. Filter Medium

In a first embodiment, a filter medium is provided according to claim 1.

The multicomponent fiber and the monocomponent fiber are present in the filter medium as a mixture of fibers. Additionally or alternatively, the multicomponent fiber and the monocomponent fiber may be present or deposited on a substrate. The substrate may include coarse fibers having an average fiber diameter of ≥ ∼1 µm, ≥ ∼2 µm, ≥ ∼3 µm, ≥ ∼4 µm, ≥ ∼5 µm, ≥ ∼6 µm, ≥ ∼7 µm , ≥ ∼8 µm, ≥ ∼9 µm, and ≥ ∼10 µm. Ranges expressly disclosed include combinations of the above-enumerated values, *e.g.*, ∼1 µm to ∼10 µm, ∼2 µm to ∼6 µm, ∼3 µm to ∼9 µm, ∼5 µm to ∼8 µm, *etc.* The substrate fibers may comprise a polymeric material including, but not limited to polyolefins, polyesters, polyamides, polyacrylates, polymethacrylates, polyurethanes, vinyl polymers, fluoropolymers, polystyrene, thermoplastic elastomers, polylactic acid, polyhydroxy alkanates, cellulose and mixtures thereof. In particular, the substrate fibers comprise polyester.

The filter medium has a basis weight of ≥ ∼20 gsm, ≥ ∼30 gsm, ≥ ∼40 gsm, ≥ ∼50 gsm, ≥ ∼60 gsm, ≥ ∼70 gsm, ≥ ∼80 gsm, ≥ ∼90 gsm, ≥ ∼100 gsm, ≥ ∼110 gsm, ≥ ∼120 gsm, ≥ ∼130 gsm, ≥ ∼140 gsm, ≥ ∼150 gsm, ≥ ∼160 gsm, ≥ ∼170 gsm, ≥ ∼180 gsm, ≥ ∼190 gsm, ≥ ∼200 gsm, ≥ ∼210 gsm, ≥ ∼220 gsm, ≥ ∼230 gsm, ≥ ∼240 gsm, ≥ ∼250 gsm, ≥ ∼260 gsm, ≥ ∼270 gsm, ≥ ∼280 gsm, ≥ ∼290 gsm, ≥ ∼300 gsm, ≥ ∼310 gsm, ≥ ∼320 gsm, ≥ ∼330 gsm, ≥ ∼340 gsm, ≥ ∼350 gsm, ≥ ∼360 gsm, ≥ ∼370 gsm, ≥ ∼380 gsm, ≥ ∼390 gsm, ≥ ∼400 gsm, ≥ ∼410 gsm, ≥ ∼420 gsm, ≥ ∼430 gsm, ≥ ∼440 gsm, ≥ ∼450 gsm, ≥ ∼460 gsm, ≥ ∼470 gsm, ≥ ∼480 gsm, ≥ ∼490 gsm, and ≥ ∼500 gsm. Particularly, the filter medium has a basis weight of ≥ ∼50 gsm, ≥ -80 gsm, ≥ ∼200 gsm, or ≥ ∼300 gsm. Additionally or alternatively, the filter medium has a basis weight of ≤ ∼20 gsm, ≤ ∼30 gsm, ≤ ∼40 gsm, ≤ ∼50 gsm, ≤ ∼60 gsm, ≤ ∼70 gsm, ≤ ∼80 gsm, ≤ ∼90 gsm, ≤ ∼100 gsm, ≤ ∼110 gsm, ≤ ∼120 gsm, ≤ ∼130 gsm, ≤ ∼140 gsm, ≤ ∼150 gsm, ≤ ∼160 gsm, ≤ ∼170 gsm, ≤ ∼180 gsm, ≤ ∼190 gsm, ≤ ∼200 gsm, ≤ ∼210 gsm, ≤ ∼220 gsm, ≤ ∼230 gsm, ≤ ∼240 gsm, ≤ ∼250 gsm, ≤ ∼260 gsm, ≤ ∼270 gsm, ≤ ∼280 gsm, ≤ ∼290 gsm, ≤ ∼300 gsm, ≤ ∼310 gsm, ≤ ∼320 gsm, ≤ ∼330 gsm, ≤ ∼340 gsm, ≤ ∼350 gsm, ≤ ∼360 gsm, ≤ ∼370 gsm, ≤ ∼380 gsm, ≤ ∼390 gsm, ≤ ∼400 gsm, ≤ ∼410 gsm, ≤ ∼420 gsm, ≤ ∼430 gsm, ≤ ∼440 gsm, ≤ ∼450 gsm, ≤ ∼460 gsm, ≤ ∼470 gsm, ≤ ∼480 gsm, ≤ ∼490 gsm, and ≤ ∼500 gsm. Ranges expressly disclosed include combinations of the above-enumerated upper and lower limits, *e.g.,* -20 gsm to ∼500 gsm, -80 gsm to ∼200 gsm, -50 gsm to ∼300 gsm, *etc.* In particular, the filter medium has a basis weight of -50 gsm to ∼300 gsm.

Additionally or alternatively, the filter medium can have a filter efficiency of ≥ ∼10%, ≥ ∼20%, ≥∼30%, ≥ ∼40%, ≥ ∼50%, ≥ ∼60%, ≥ ∼70%, ≥ ∼80%, ≥ ∼81%, ≥ ∼82%, ≥ ∼83%, ≥ ∼84%, ≥ ∼85%, ≥ ∼86%, ≥ ∼87%, ≥ ∼88%, ≥ ∼89%, ≥ ∼90%, ≥ ∼91%, ≥ ∼92%, ≥ ∼93%, ≥ ∼94%, ≥ ∼95%, ≥ ∼96%, ≥ ∼97%, ≥ ∼98%, ≥ ∼99%, ≥ ∼99.1%, ≥ ∼99.2%, ≥ ∼99.3%, ≥ ∼99.4%, ≥ ∼99.5%, ≥ ∼99.6%, ≥ ∼99.7%, ≥ ∼99.8%, ≥ -99.9% and ∼00%. Particularly, the filter medium can have a filter efficiency of ≥ ∼80%, ≥ ∼85%, ≥ ∼90%, ≥ ∼95%. Ranges expressly disclosed include combinations of the above-enumerated values, *e.g.,* ∼10% to ∼100%, ∼50% to 99%, ∼80% to 100%, *etc.* The filter efficiency is determined by International Standard ISO 4548-12. The filter medium can have the above-described filter effiencies for any of the following particle sizes: ≥ ∼2 µm , ≥ ∼4 µm, ≥ ∼5 µm, ≥ ∼6 µm, ≥ ∼7 µm, ≥ ∼8 µm, ≥ ∼10 µm, ≥ ∼12 µm, ≥ ∼14 µm, ≥ ∼15 µm, ≥ ∼16 µm, ≥ ∼18 µm, ≥ ∼20 µm, ≥ ∼25 µm, ≥ ∼30 µm, ≥ ∼35 µm, ≥ ∼40 µm, ≥ ∼45 µm, ≥ ∼50 µm, ≥ ∼55 µm, ≥ ∼60 µm, ≥ ∼65 µm, ≥ ∼70 µm, ≥ ∼75 µm, ≥ ∼85 µm, ≥ ∼90 µm, ≥ ∼95 µm and ≥ ∼100 µm. Ranges expressly disclosed include combinations of the above-enumerated values, *e.g., ∼*2 µm to ∼100 µm, ∼4 µm to ∼40 µm, ∼5 µm to ∼20 µm , *etc.*

### A. Multicomponent Fiber

The multicomponent fiber may comprise at least two components, at least three components, at least four components, at least five components, at least six components, at least seven components, at least eight components, at least nine components or at least ten components. In particular, the multicomponent fiber comprises two components (*i.e.,* a bicomponent fiber) or three components (*i.e.,* a tricomponent fiber). In other words, a bicomponent fiber can comprise a first component and second component; a tricomponent fiber can comprise a first component, a second component and third component; and so on.

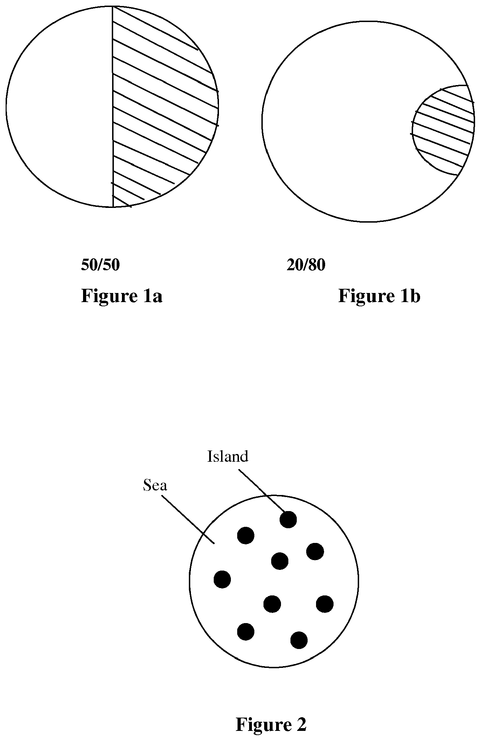

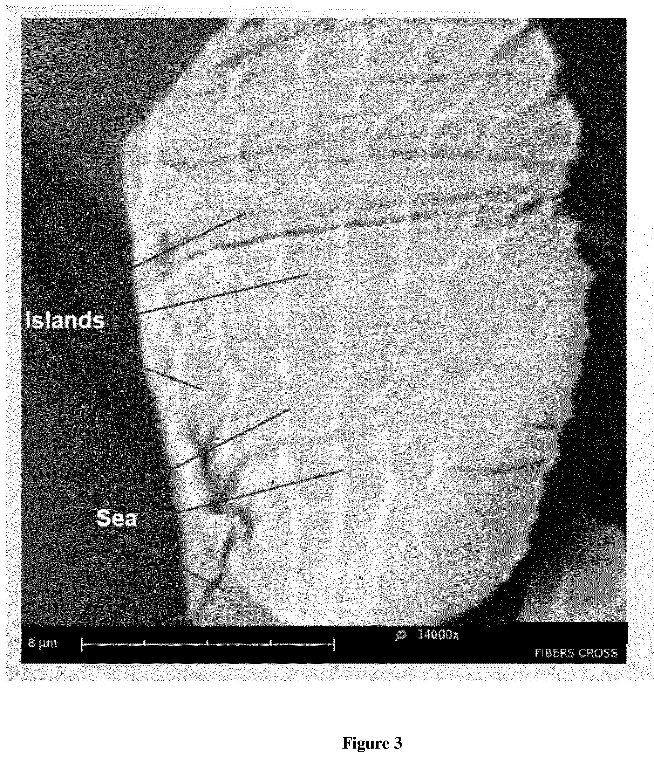

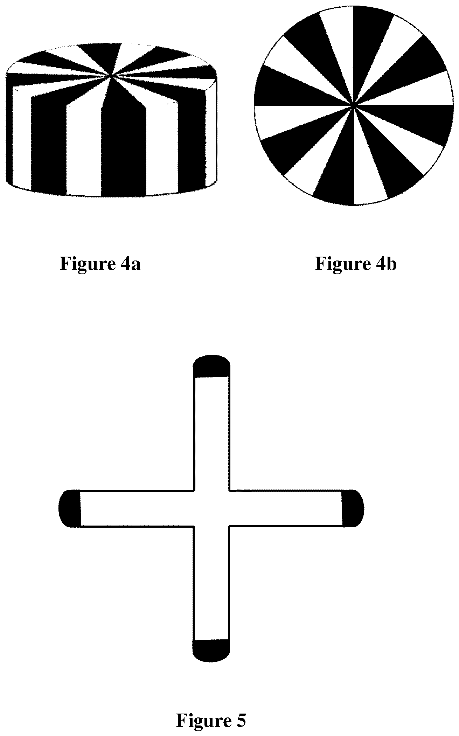

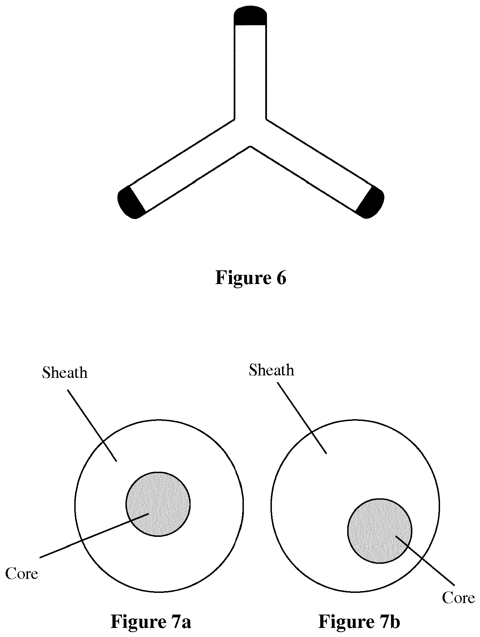

The multicomponent fiber can have various configurations, such as, but not limited to side-by-side, islands-in-the-sea, segmented pie, segmented cross, tipped multilobal and sheath-core. Examples of side-by-side configurations of the multicomponent fiber are shown in Figures 1a and 1b. An example of an islands-in-the-sea configuration of the multicomponent fiber is shown in Figure 2. Further, an SEM image of a bicomponent fiber with an islands-in-the-sea configuration is shown in Figure 3. In such a configuration, the "sea" component *(i.e.,* a first component) surrounds a plurality of individual "island" components *(e.g.,* a second component). Additionally or alternatively, the islands may independently include a third component, a fourth component, a fifth component, a sixth component, and/or a combination thereof. Generally, the sea component substantially surrounds and encapsulates the islands components but this is not required. Further, the sea component can generally make up the entire outer exposed surface of the fibers, although, this is not required. Examples of a segmented pie configuration or wedge configuration of the multicomponent fiber are shown in Figures 4a and 4b. The segmented pie configuration can have symmetrical or asymmetrical geometry. An example of a segmented cross configuration of the multicomponent fiber is shown in Figure 5. An example of a tipped multilobal configuration is shown in Figure 6. The tipped multilobal configuration can have 3 to 8 lobes, particularly 3 lobes (*i.e.,* trilobal), as shown in Figure 6. An example of a sheath-core configuration of the multicomponent fiber is shown in Figures 7a and 7b. In such a configuration, a "sheath" component (*i.e.,* a first component) surrounds a "core" component (*i.e.,* a second component). Generally, the sheath component substantially surrounds and encapsulates the core component, but this is not required. Further, the sheath component can generally make up the entire outer exposed surface of the fibers, although, this is not required. In particular, the multicomponent fiber has an islands-in-the-sea configuration. While Figures 1a, 1b, 3, 4a, 4b, 5, and 6 show configurations for bicomponent fibers, such configurations described herein are not only limited to bicomponent fibers, but can also include at least three components, at least four components, at least five components, at least six components, at least seven components, at least eight components, at least nine components or at least ten components.

The multicomponent configurations described herein can have varying weight ratios of components. For example, a bicomponent fiber in the configurations described herein can include at least a first component and a second component in the following ratios: ∼5/95, ∼10/90, ∼15/85, ∼20/80, ∼25/75, ∼30/70, ∼35/65, ∼40/60, ∼45/55, ∼50/50, ∼55/45, ∼60/40, ∼65/35, ∼70/30, ∼75/25, ∼80/20, ∼85/15, ∼90/10, ∼95/5, *etc.* Figure 1a shows a side-by-side configuration having a 50/50 ratio of first component and second component and Figure 1b shows a side-by-side configuration having a 20/80 ratio of first component and second component.

(Concerning the text below 1 inch = 2.54 cm). Additionally or alternatively, the multicomponent fiber has a length of ≥ ∼0.2 inch, ≥ ∼0.4 inch, ≥ ∼0.6 inch, ≥ ∼0.8 inch, ≥ ∼1.0 inch, ≥ ∼1.1 inches, ≥ ∼1.2 inches, ≥ ∼1.3 inches, ≥ ∼1.4 inches, ≥ ∼1.5 inches, ≥ ∼1.6 inches, ≥ ∼1.7 inches, ≥ ∼1.8 inches, ≥ ∼1.9 inches, ≥ ∼2.0 inches, ≥ ∼2.1 inches, ≥ ∼2.2 inches, ≥ ∼2.3 inches, ≥ ∼2.4 inches, ≥ ∼2.5 inches, ≥ ∼2.6 inches, ≥ ∼2.7 inches, ≥ ∼2.8 inches, ≥ ∼2.9 inches, ≥ ∼3.0 inches, ≥ ∼3.1 inches, ≥ ∼3.2 inches, ≥ ∼3.4 inches, ≥ ∼3.5 inches, ≥ ∼3.6 inches, ≥ ∼3.7 inches, ≥ ∼3.8 inches, ≥ ∼3.9 inches, ≥ ∼4.0 inches, ≥ ∼4.2 inches, ≥ ∼4.4 inches, ≥ ∼4.6 inches, ≥ ∼4.8 inches, ≥ ∼5.0 inches, ≥ ∼5.2 inches, ≥ ∼5.4 inches, ≥ ∼5.6 inches, ≥ ∼5.8 inches, and ≥ ∼6.0 inches. Particularly, the multicomponent fiber has a length of ≥ ∼1.5 inch. Additionally or alternatively, the multicomponent fiber has a length of ≤ ∼0.2 inch, ≤ ∼0.4 inch, ≤ ∼0.6 inch, ≤ ∼0.8 inch, ≤ ∼1.0 inch, ≤ ∼1.1 inches, ≤ ∼1.2 inches, ≤ ∼1.3 inches, ≤ ∼1.4 inches, ≤ ∼1.5 inches, ≤ ∼1.6 inches, ≤ ∼1.7 inches, ≤ ∼1.8 inches, ≤ ∼1.9 inches, ≤ ∼2.0 inches, ≤ ∼2.1 inches, ≤ ∼2.2 inches, ≤ ∼2.3 inches, ≤ ∼2.4 inches, ≤ ∼2.5 inches, ≤ ∼2.6 inches, ≤ ∼2.7 inches, ≤ ∼2.8 inches, ≤ ∼2.9 inches, ≤ ∼3.0 inches, ≤ ∼3.1 inches, ≤ ∼3.2 inches, ≤ ∼3.4 inches, ≤ ∼3.5 inches, ≤ ∼3.6 inches, ≤ ∼3.7 inches, ≤ ∼3.8 inches, ≤ ∼3.9 inches, ≤ ∼4.0 inches, ≤ ∼4.2 inches, ≤ ∼4.4 inches, ≤ ∼4.6 inches, ≤ ∼4.8 inches, ≤ ∼5.0 inches, ≤ ∼5.2 inches, ≤ ∼5.4 inches, ≤ ∼5.6 inches, ≤ ∼5.8 inches, and ≤ ∼6.0 inches. According to the invention, the multicomponent fiber has a length of ≤ ∼3.0 inches. Ranges expressly disclosed include combinations of the above-enumerated upper and lower limits, *e.g.,* ∼0.2 inches to ∼6.0 inches, ∼0.8 inches to ∼4.0 inches, ∼1.5 to ∼3.0 inches, ∼2.0 to ∼5.4 inches, *etc.*

Additionally or alternatively, the multicomponent fiber is present in the filter medium in an amount of ≥ ∼5 wt%, ≥ ∼10 wt%, ≥ ∼15 wt%, ≥ ∼20 wt%, ≥ ∼25 wt%, ≥ ∼30 wt%, ≥ ∼35 wt%, ≥ ∼40 wt%, ≥ ∼45 wt%, ≥ ∼50 wt%, ≥ ∼55 wt%, ≥ ∼60 wt%, ≥ ∼65 wt%, ≥ ∼70 wt%, ≥ ∼75 wt%, ≥ ∼80 wt%, ≥ ∼85 wt%, ≥ ∼90 wt%, and ≥ ∼95 wt%. Particularly, the multicomponent fiber is present in the filter medium in an amount of ≥ ∼70 wt%, ≥ ∼75 wt%, ≥ ∼80 wt%, ≥ ∼85 wt% or ≥ ∼90 wt%. Additionally or alternatively, the multicomponent fiber is present in the filter medium in an amount of ≤ ∼5 wt%, ≤ ∼10 wt%, ≤ ∼15 wt%, ≤ ∼20 wt%, ≤ ∼25 wt%, ≤ ∼30 wt%, ≤ ∼35 wt%, ≤ ∼40 wt%, ≤ ∼45 wt%, ≤ ∼50 wt%, ≤ ∼55 wt%, ≤ ∼60 wt%, ≤ ∼65 wt%, ≤ ∼70 wt%, ≤ ∼75 wt%, ≤ ∼80 wt%, ≤ ∼85 wt%, ≤ ∼90 wt%, and ≤ ∼95 wt%. Ranges expressly disclosed include combinations of the above-enumerated upper and lower limits, *e.g.,* -5 wt% to -95 wt%, -10 wt% to -90 wt%, -50 wt% to -95 wt%, -70 wt% to -90 wt%, *etc.* Particularly, the multicomponent fiber is present in the filter medium in an amount of -10 wt% to -90 wt%.

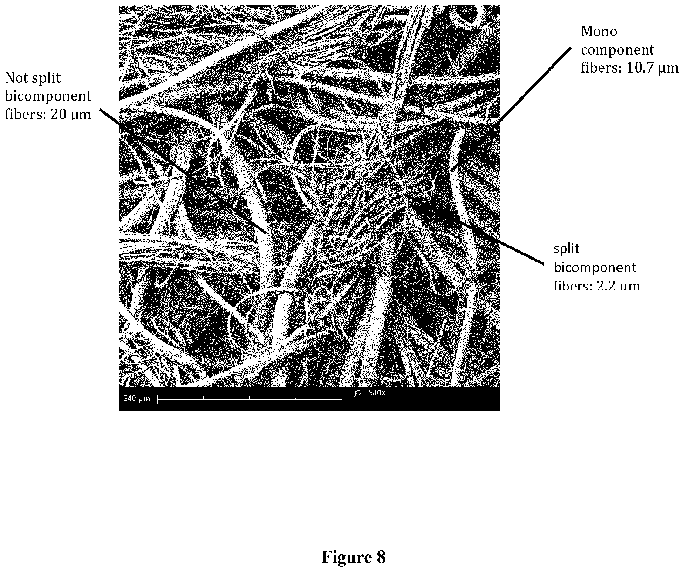

The multicomponent fiber may be split into various split components (*i.e.*, as a splittable multicomponent fiber). The splittable multicomponent fiber may be responsive to mechanical splitting (*e.g.,* carding, hydroentangling, needlepunching, etc.), chemical splitting, solvent splitting, and/or thermal splitting. According to the invention, the splittable multicomponent fiber is responsive to mechanical splitting. Thus, at least a portion of the splittable multicomponent fiber can be present in the filter medium in split form as various split components, such as a first split component, a second split component, a third split component, a fourth split component, a fifth split component, a sixth split component, a seven split component, an eighth split component, a ninth split component and/or a tenth split component. Particularly, at least a portion of the splittable multicomponent fiber is present in the filter medium in split form as at least a first split component and a second split component. An SEM image illustrating the multicomponent fiber in split and not split form and including the monocomponent fiber is shown in Figure 8.

Additionally or alternatively, the splittable multicomponent fiber can have a split ratio of ≥ ∼5%, ≥ ∼10%, ≥ ∼15%, ≥ ∼20%, ≥ ∼25%, ≥ ∼30%, ≥ ∼35%, ≥ ∼40%, ≥ ∼45%, ≥ ∼50%, ≥ ∼55%, ≥ ∼60%, ≥ ∼65%, ≥ ∼70%, ≥ ∼85%, ≥ ∼90%, and ≥ ∼95%. Particularly, the splittable multicomponent fiber has split ratio of ≥ ∼10%, ≥ ∼25%, ≥ ∼50%, or ≥ ∼80%. Additionally or alternatively, the splittable multicomponent fiber can have split ratio of ≤ ∼5%, ≤ ∼10%, ≤ ∼15%, ≤ ∼20%, ≤ ∼25%, ≤ ∼30%, ≤ ∼35%, ≤ ∼40%, ≤ ∼45%, ≤ ∼50%, ≤ ∼55%, ≤ ∼60%, ≤ ∼65%, ≤ ∼70%, ≤ ∼85%, ≤ ∼90%, and ≤ ∼95%. Ranges expressly disclosed include combinations of the above-enumerated upper and lower limits, *e.g.*, *∼*5% to ∼95%, ∼10% to ∼90%, ∼20% to ∼75%, ∼50% to ∼80%, *etc.*

Additionally or alternatively, each of the components (split or not split) of the multicomponent fiber can have the same or different average diameters, particularly different average diameters. Each of the components (split or not split) of the multicomponent fiber can independently have an average diameter of ≤ ∼0.1 µm, ≤ ∼0.2 µm, ≤ ∼0.3 µm, ≤ ∼0.4 µm, ≤ ∼0.5 µm, ≤ ∼0.6 µm, ≤ ∼0.7 µm, ≤ ∼0.8 µm, ≤ ∼0.9 µm, ≤ ∼1.0 µm, ≤ ∼1.2 µm, ≤ ∼1.4 µm, ≤ ∼1.6 µm, ≤ ∼1.8 µm, ≤ ∼2.0 µm, ≤ ∼2.2 µm, ≤ ∼2.4 µm, ≤ ∼2.6 µm, ≤ ∼2.8 µm, ≤ ∼3.0 µm, ≤ ∼3.2 µm, ≤ ∼3.4 µm, ≤ ∼3.6 µm, ≤ ∼3.8 µm, ≤ ∼4.0 µm, ≤ ∼4.2 µm, ≤ ∼4.4 µm, ≤ ∼4.6 µm, ≤ ∼4.8 µm, ≤ ∼5.0 µm, ≤ ∼5.2 µm, ≤ ∼5.4 µm, ≤ ∼5.6 µm, ≤ ∼5.8 µm, ≤ ∼6.0 µm, ≤ ∼6.2 µm, ≤ ∼6.4 µm, ≤ ∼6.6 µm, ≤ ∼6.8 µm, ≤ ∼7.0 µm, ≤ ∼7.2 µm, ≤ ∼7.4 µm, ≤ ∼7.6 µm, ≤ ∼7.8 µm, ≤ ∼8.0 µm, ≤ ∼8.2 µm, ≤ ∼8.4 µm, ≤ ∼8.6 µm, ≤ ∼8.8 µm, ≤ ∼9.0 µm, ≤ ∼9.2 µm, ≤ ∼9.4 µm, ≤ ∼9.6 µm, ≤ ∼9.8 µm, and ≤ ∼10.0 µm. Additionally or alternatively, each of the components (split or not split) of the multicomponent fiber can independently have an average diameter of ≥ ∼0.1 µm, ≥ ∼0.2 µm, ≥ ∼0.3 µm, ≥ ∼0.4 µm, ≥ ∼0.5 µm, ≥ ∼0.6 µm, ≥ ∼0.7 µm, ≥ ∼0.8 µm, ≥ ∼0.9 µm, ≥ ∼1.0 µm, ≥ ∼1.2 µm, ≥ ∼1.4 µm, ≥ ∼1.6 µm, ≥ ∼1.8 µm, ≥ ∼2.0 µm, ≥ ∼2.2 µm, ≥ ∼2.4 µm, ≥ ∼2.6 µm, ≥ ∼2.8 µm, ≥ ∼3.0 µm, ≥ ∼3.2 µm, ≥ ∼3.4 µm, ≥ ∼3.6 µm, ≥ ∼3.8 µm, ≥ ∼4.0 µm, ≥ ∼4.2 µm, ≥ ∼4.4 µm, ≥ ∼4.6 µm, ≥ ∼4.8 µm, ≥ ∼5.0 µm, ≥ ∼5.2 µm, ≥ ∼5.4 µm, ≥ ∼5.6 µm, ≥ ∼5.8 µm, ≥ ∼6.0 µm, ≥ ∼6.2 µm, ≥ ∼6.4 µm, ≥ ∼6.6 µm, ≥ ∼6.8 µm, ≥ ∼7.0 µm, ≥ ∼7.2 µm, ≥ ∼7.4 µm, ≥ ∼7.6 µm, ≥ ∼7.8 µm, ≥ ∼8.0 µm, ≥ ∼8.2 µm, ≥ ∼8.4 µm, ≥ ∼8.6 µm, ≥ ∼8.8 µm, ≥ ∼9.0 µm, ≥ ∼9.2 µm, ≥ ∼9.4 µm, ≥ ∼9.6 µm, ≥ ∼9.8 µm, and ≥ ∼10.0 µm. Ranges expressly disclosed include combinations of the above-enumerated upper and lower limits, e.g., ∼0.1 µm to ∼10.0 µm, ∼0.8 µm to ∼6.6 µm, ∼0.1 µm to ∼2.0 µm, ∼1.0 µm to ∼5.0 µm, ∼5.0 µm to ∼10.0 µm, etc. According to the invention, at least a portion of the splittable multicomponent is present in the filter medium in split form as a first split component having an average diameter of ≤ ∼2.0 µm or ≤ ∼1.0 µm and a second split component having an average diameter of ∼1.0 µm to ∼5.0 µm.

Additionally or alternatively, each of the components (split or not split) of the multicomponent fiber may be independently present in a weight ratio of multicomponent fiber of ≤ ∼5%, ≤ ∼10%, ≤ ∼15%, ≤ ∼20%, ≤ ∼25%, ≤ ∼30%, ≤ ∼35%, ≤ ∼40%, ≤ ∼45%, ≤ ∼50%, ≤ ∼55%, ≤ ∼60%, ≤ ∼65%, ≤ ∼70%, ≤ ∼75%, ≤ ∼80%, ≤ ∼85%, ≤ ∼90%, and ≤ ∼95%. Additionally or alternatively, each of the components (split or not split) of the multicomponent fiber may be independently present in a weight ratio of multicomponent fiber of ≥ ∼5%, ≥ ∼10%, ≥ ∼15%, ≥ ∼20%, ≥ ∼25%, ≥ ∼30%, ≥ ∼35%, ≥ ∼40%, ≥ ∼45%, ≥ ∼50%, ≥ ∼55%, ≥ ∼60%, ≥ ∼65%, ≥ ∼70%, ≥ ∼75%, ≥ ∼80%, ≥ ∼85%, ≥ ∼90%, and ≥ ∼95%. Ranges expressly disclosed include combinations of the above-enumerated upper and lower limits, *e.g*., *∼*5% to ∼95%, ∼10% to ∼90%, ∼25% to ∼80%, ∼40% to *∼*70%*, etc.* In particular, the first split component can be present in the filter medium in a weight ratio of ∼10% to ∼90% of the splittable multicomponent fiber and the second split component can be present in the filter medium in a weight ratio of ∼10% to ∼90% of the splittable multicomponent fiber. Therefore, for example, if the first split component is present in the filter medium in a weight ratio of 10% of the splittable multi-component fiber, the second split component is present in the filter medium in a weight ratio of 90% of the splittable multicomponent fiber.

Additionally or alternatively, the components (split or not split) of the multicomponent fiber can comprise materials, such as, but not limited to a polymeric material, a ceramic material, titania, glass, alumina and silica, particularly, a polymeric material. Suitable examples of a polymeric material include, but are not limited to polyolefins, polyesters, polyamides, polyacrylates, polyurethanes, vinyl polymers, fluoropolymers, polystyrene, thermoplastic elastomers, polylactic acid, polyhydroxy alkanates, cellulose and mixtures thereof.

Examples of suitable polyolefins include, but are not limited to polyethylene, e.g., high density polyethylene, low density polyethylene and linear low density polyethylene; polypropylene, e.g., isotactic polypropylene, syndiotactic polypropylene, and blends of isotactic polypropylene and atactic polypropylene; polybutene, e.g., poly(1-butene) and poly(2-butene); polypentene, e.g., poly(1-pentene), poly(2-pentene), poly(3-mehtyl-1-pentene) and poly(4-methyl-1-pentene); copolymers thereof, e.g., ethylene-propylene copolymers; and blends thereof. Suitable copolymers include random and block copolymers prepared from two or more different unsaturated olefin monomers, such as ethylene/propylene and ethylene/butylene copolymers. Polyolefins using single site catalysts, sometimes referred to as metallocene catalysts, may also be used. Examples of polyacrylates include, but are not limited to polymethacrylate, polymethylmethacrylate, *etc.* Examples of cellulose materials include, but are not limited to cellulosic nitrate, cellulosic acetate, cellulosic acetate butyrate, ethyl cellulose, *etc.*

Examples of suitable polyesters include, but are not limited to polyethylene terephthalate (PET), polytrimethylene terephthalate, polybutylene terephthalate, polytetramethylene terephthalate, polycyclohexylene-1,4-dimethylene terephthalate, and isophthalate copolymers thereof, as well as blends thereof. Biodegradable polyesters such as polylactic acid and copolymers and blends thereof may also be used. Suitable polyamides include, but are not limited to nylon, such as nylon 6, nylon 6/6, nylon 4/6, nylon 11, nylon 12, nylon 6/10, nylon 6/12, nylon 12/12, copolymers of caprolactam and alkylene oxide diamine, and the like, as well as blends and copolymers thereof. Examples of suitable vinyl polymers are polyvinyl chloride, and polyvinyl alcohol. In particular, the components (split or not split) of the multicomponent fiber comprise nylon and/or polyester, particularly the first split component comprises nylon and the second split component comprises polyester.

Additionally or alternatively, the polymeric material may further include other additional components not adversely affecting the desired properties thereof. Exemplary additional components include, but are not limited to antioxidants, stabilizers, surfactants, waxes, flow promoters, solid solvents, particulates, and other materials added to enhance processability or end-use properties of the polymeric components. Such additives can be used in conventional amounts.

### B. Monocomponent Fiber

(Concerning the text below 1 in = 0 2.54 cm). The monocomponent fiber has a length of ≥ ∼0.2 inch, ≥ ∼0.4 inch, ≥ ∼0.6 inch, ≥ ∼0.8 inch, ≥ ∼1.0 inch, ≥ ∼1.1 inches, ≥ ∼1.2 inches, ≥ ∼1.3 inches, ≥ ∼1.4 inches, ≥ ∼1.5 inches, ≥ ∼1.6 inches, ≥ ∼1.7 inches, ≥ ∼1.8 inches, ≥ ∼1.9 inches, ≥ ∼2.0 inches, ≥ ∼2.1 inches, ≥ ∼2.2 inches, ≥ ∼2.3 inches, ≥ ∼2.4 inches, ≥ ∼2.5 inches, ≥ ∼2.6 inches, ≥ ∼2.7 inches, ≥ ∼2.8 inches, ≥ ∼2.9 inches, ≥ ∼3.0 inches, ≥ ∼3.1 inches, ≥ ∼3.2 inches, ≥ ∼3.4 inches, ≥ ∼3.5 inches, ≥ ∼3.6 inches, ≥ ∼3.7 inches, ≥ ∼3.8 inches, ≥ ∼3.9 inches, ≥ ∼4.0 inches, ≥ ∼4.2 inches, ≥ ∼4.4 inches, ≥ ∼4.6 inches, ≥ ∼4.8 inches, ≥ ∼5.0 inches, ≥ ∼5.2 inches, ≥ ∼5.4 inches, ≥ ∼5.6 inches, ≥ ∼5.8 inches, and ≥ ∼6.0 inches. Additionally or alternatively, the monocomponent fiber has a length of ≤ ∼0.2 inch, ≤ ∼0.4 inch, ≤ ∼0.6 inch, ≤ ∼0.8 inch, ≤ ∼1.0 inch, ≤ ∼1.1 inches, ≤ ∼1.2 inches, ≤ ∼1.3 inches, ≤ ∼1.4 inches, ≤ ∼1.5 inches, ≤ ∼1.6 inches, ≤ ∼1.7 inches, ≤ ∼1.8 inches, ≤ ∼1.9 inches, ≤ ∼2.0 inches, ≤ ∼2.1 inches, ≤ ∼2.2 inches, ≤ ∼2.3 inches, ≤ ∼2.4 inches, ≤ ∼2.5 inches, ≤ ∼2.6 inches, ≤ ∼2.7 inches, ≤ ∼2.8 inches, ≤ ∼2.9 inches, ≤ ∼3.0 inches, ≤ ∼3.1 inches, ≤ ∼3.2 inches, ≤ ∼3.4 inches, ≤ ∼3.5 inches, ≤ ∼3.6 inches, ≤ ∼3.7 inches, ≤ ∼3.8 inches, ≤ ∼3.9 inches, ≤ ∼4.0 inches, ≤ ∼4.2 inches, ≤ ∼4.4 inches, ≤ ∼4.6 inches, ≤ ∼4.8 inches, ≤ ∼5.0 inches, ≤ ∼5.2 inches, ≤ ∼5.4 inches, ≤ ∼5.6 inches, ≤ ∼5.8 inches, and ≤ ∼6.0 inches. Particularly, the monocomponent fiber has a length of ≤ ∼3.0 inches. Ranges expressly disclosed include combinations of the above-enumerated upper and lower limits, *e.g.,* ∼0.2 to ∼6.0, ∼0.8 to ∼4.0, ∼1.5 to ∼3.0, ∼2.0 to ∼5.4, *etc.*

Additionally or alternatively, the monocomponent fiber is present in the filter medium in an amount of ≥ ∼5 wt%, ≥ ∼10 wt%, ≥ ∼15 wt%, ≥ ∼20 wt%, ≥ ∼25 wt%, ≥ ∼30 wt%, ≥ ∼35 wt%, ≥ ∼40 wt%, ≥ ∼45 wt%, ≥ ∼50 wt%, ≥ ∼55 wt%, ≥ ∼60 wt%, ≥ ∼65 wt%, ≥ ∼70 wt%, ≥ ∼75 wt%, ≥ ∼80 wt%, ≥ ∼85 wt%, ≥ ∼90 wt%, and ≥ -95 wt%. Additionally or alternatively, the monocomponent fiber is present in the filter medium in an amount of ≤ ∼5 wt%, ≤ ∼10 wt%, ≤ ∼15 wt%, ≤ ∼20 wt%, ≤ ∼25 wt%, ≤ ∼30 wt%, ≤ ∼35 wt%, ≤ ∼40 wt%, ≤ ∼45 wt%, ≤ ∼50 wt%, ≤ ∼55 wt%, ≤ ∼60 wt%, ≤ ∼65 wt%, ≤ ∼70 wt%, ≤ ∼75 wt%, ≤ ∼80 wt%, ≤ ∼85 wt%, ≤ ∼90 wt%, and ≤ ∼95 wt%. Particularly, the monocomponent fiber is present in the filter medium in an amount of ≤ ∼50 wt%. Ranges expressly disclosed include combinations of the above-enumerated upper and lower limits, *e.g.,* -5 wt% to ∼95 wt%, ∼10 wt% to ∼90 wt%, ∼50 wt% to ∼95 wt%, ∼70 wt% to ∼90 wt%, *etc.* Particularly, the monocomponent fiber is present in the filter medium in an amount of ∼10 wt% to -90 wt%.

Additionally or alternatively, the monocomponent fiber can have an average diameter of ≤ ∼0.1 µm, ≤ ∼0.2 µm, ≤ ∼0.3 µm, ≤ ∼0.4 µm, ≤ ∼0.5 µm, ≤ ∼0.6 µm, ≤ ∼0.7 µm, ≤ ∼0.8 µm, ≤ ∼0.9 µm, ≤ ∼1.0 µm, ≤ ∼1.2 µm, ≤ ∼1.4 µm, ≤ ∼1.6 µm, ≤ ∼1.8 µm, ≤ ∼2.0 µm, ≤ ∼2.2 µm, ≤ ∼2.4 µm, ≤ ∼2.6 µm, ≤ ∼2.8 µm, ≤ ∼3.0 µm, ≤ ∼3.2 µm, ≤ ∼3.4 µm, ≤ ∼3.6 µm, ≤ ∼3.8 µm, ≤ ∼4.0 µm, ≤ ∼4.2 µm, ≤ ∼4.4 µm, ≤ ∼4.6 µm, ≤ ∼4.8 µm, ≤ ∼5.0 µm, ≤ ∼5.2 µm, ≤ ∼5.4 µm, ≤ ∼5.6 µm, ≤ ∼5.8 µm, ≤ ∼6.0 µm, ≤ ∼6.2 µm, ≤ ∼6.4 µm, ≤ ∼6.6 µm, ≤ ∼6.8 µm, ≤ ∼7.0 µm, ≤ ∼7.2 µm, ≤ ∼7.4 µm, ≤ ∼7.6 µm, ≤ ∼7.8 µm, ≤ ∼8.0 µm, ≤ ∼8.2 µm, ≤ ∼8.4 µm, ≤ ∼8.6 µm, ≤ ∼8.8 µm, ≤ ∼9.0 µm, ≤ ∼9.2 µm, ≤ ∼9.4 µm, ≤ ∼9.6 µm, ≤ ∼9.8 µm, ≤ ∼10.0 µm, ≤ ∼11.0 µm, ≤ ∼12.0 µm, ≤ ∼13.0 µm, ≤ ∼14.0 µm, ≤ ∼15.0 µm, ≤ ∼16.0 µm, ≤ ∼17.0 µm, ≤ ∼18.0 µm, ≤ ∼19.0 µm and ≤ ∼20.0 µm. Additionally or alternatively, the monocomponent fiber can have an average diameter of ≥ ∼0.1 µm, ≥ ∼0.2 µm, ≥ ∼0.3 µm, ≥ ∼0.4 µm, ≥ ∼0.5 µm, ≥ ∼0.6 µm, ≥ ∼0.7 µm, ≥ ∼0.8 µm, ≥ ∼0.9 µm, ≥ ∼1.0 µm, ≥ ∼1.2 µm, ≥ ∼1.4 µm, ≥ ∼1.6 µm, ≥ ∼1.8 µm, ≥ ∼2.0 µm, ≥ ∼2.2 µm, ≥ ∼2.4 µm, ≥ ∼2.6 µm, ≥ ∼2.8 µm, ≥ ∼3.0 µm, ≥ ∼3.2 µm, ≥ ∼3.4 µm, ≥ ∼3.6 µm, ≥ ∼3.8 µm, ≥ ∼4.0 µm, ≥ ∼4.2 µm, ≥ ∼4.4 µm, ≥ ∼4.6 µm, ≥ ∼4.8 µm, ≥ ∼5.0 µm, ≥ ∼5.2 µm, ≥ ∼5.4 µm, ≥ ∼5.6 µm, ≥ ∼5.8 µm, ≥ ∼6.0 µm, ≥ ∼6.2 µm, ≥ ∼6.4 µm, ≥ ∼6.6 µm, ≥ ∼6.8 µm, ≥ ∼7.0 µm, ≥ ∼7.2 µm, ≥ ∼7.4 µm, ≥ ∼7.6 µm, ≥ ∼7.8 µm, ≥ ∼8.0 µm, ≥ ∼8.2 µm, ≥ ∼8.4 µm, ≥ ∼8.6 µm, ≥ ∼8.8 µm,≥ ∼9.0 µm, ≥ ∼9.2 µm, ≥ ∼9.4 µm, ≥ ∼9.6 µm, ≥ ∼9.8 µm, ≥ ∼10.0 µm, ≥ ∼11.0 µm, ≥ ∼12.0 µm, ≥ ∼13.0 µm, ≥ ∼14.0 µm, ≥ ∼15.0 µm, ≥ ∼16.0 µm, ≥ ∼17.0 µm, ≥ ∼18.0 µm, ≥ ∼19.0 µm and ≥ ∼20.0 µm. According to the invention, the monocomponent fiber has an average diameter of ≥ ∼5.0 µm. Ranges expressly disclosed include combinations of the above-enumerated upper and lower limits, e.g., ∼0.1 µm to ∼10.0 µm, ∼0.8 µm to ∼6.6 µm, ∼0.1 µm to ∼2.0 µm, ∼1.0 µm to ∼5.0 µm, ∼5.0 µm to ∼10.0 µm, etc.

Additionally or alternatively, the monocomponent fiber can comprise materials, such as, but not limited to a polymeric material, a ceramic material, cellulose, titania, glass, alumina and silica, as described above. Particularly, the monocomponent fiber comprises a polymeric material such as polyester.

### C. Binder

Additionally or alternatively, the multicomponent fiber and the monocomponent fiber may be adhered or bound together with an adhesive, through thermal bonding or ultrasonic bonding, through the use of binder fibers, resins, or using a combination of such techniques. An adhesive (*e.g.,* pressure sensitive adhesives, hot melt adhesives) can be applied in a variety of techniques, including, for example, powder coating, spray coating, or the use of a pre-formed adhesive web. Exemplary adhesives include, but are not limited to hot melt adhesives, such as polyesters, polyamides, acrylates, or combinations thereof (blends or copolymers).

Binder fibers may comprise polyesters (*e.g.,* low melt polyethylene terephthalate (PET), co-polyester, PET, undrawn PET, coPET), vinyl compounds (*e.g.,* polyvinyl chloride, polyvinyl alcohol, vinyl acetate, polyvinyl acetate, ethylene vinyl acetate), polyolefins (*e.g.,* PE, PP), polyurethanes and polyamides (*e.g.,* co-polyamide) materials. Particularly, the binder fiber comprises low melt PET. The binder fibers may be single component or in multicomponent fibers. Examples of suitable multi-component fibers include, but are not limited to polyolefin (*e.g.,* polyethylene (HDPE, LLDPE), polypropylene/polyester, coPET (*e.g.,* melt amorphous, melt crystalline)/polyester, coPET/nylon, and PET/PPS.

Examples of suitable resins include, but are not limited to polyesters, polyolefins, vinyl compounds (e.g., acrylics, styrenated acrylics, vinyl acetates, vinyl acrylics, polystyrene acrylate, polyacrylates, polyvinyl alcohol, polyethylene vinyl acetate, polyethylene vinyl chloride, styrene butadiene rubber, polyvinyl chloride, polyvinyl alcohol derivatives), phenolic-based, polyurethane, polyamides, polynitriles, elastomers, natural rubber, urea formaldehyde, melamine formaldehyde, phenol formaldehyde, starch polymers, a thermosetting polymer, thermoplastic and combinations thereof. In particular, the resin is an acrylic compound.

The filter medium described herein can be used in filter structures for removing various particulate materials, such as dust and soot, from fluid streams, such as gas streams and liquids. The gas streams can include air, and the liquids can be aqueous and non-aqueous, such as oil and/or fuel. The filter structures can also include a pre-filter for trapping larger particles (*e.g.,* -10 µm to ∼100 µm).

### D. Blend Composition

In various aspects, a nonwoven material blend is provided herein. The nonwoven material blend comprises the splittable multicomponent fiber as described herein, which is capable of splitting with a mechanical force (*e.g.,* carding, hydroentangling, needlepunching, *etc.*) into a first split component, and a second split component. According to the invention, the splittable multicomponent fiber is capable of splitting with a mechanical force into a first split component as described herein and a second split component as described herein.

### III. Methods of Preparing the Filter Medium

**A** method of preparing the filter medium according to claim 10 is described herein. The method comprises blending the splittable multicomponent fiber as described herein with the monocomponent fiber as described herein, and splitting the splittable multicomponent fiber into the split components as described above. Particularly, the splittable multicomponent fiber is split into the first split component and the second split component as described herein.

Suitable methods of splitting the splittable multicomponent fiber include but are not limited to mechanical splitting, chemical splitting, solvent splitting, and/or thermal splitting. According to the invention, the splittable multicomponent fiber is mechanically split. Mechanical splitting can be accomplished by carding, hydroentangling and/or needlepunching. Thermal splitting can be accomplished by applying thermal forces to the multicomponent fiber to split or dissociate the components.

As known in the art, carding generally includes the step of passing fibers through a carding machine to align the fibers as desired, typically to lay the fibers in roughly parallel rows, although the fibers may be oriented differently. The carding machine is generally comprised of a series of revolving cylinders with surfaces covered in teeth. These teeth pass through the fibers, which can cause splitting, as it is conveyed through the carding machine on a moving surface, such as a drum.

In hydroentangling, the fibers are typically conveyed longitudinally to a hydroentangling apparatus wherein a plurality of manifolds, each including one or more rows of fine orifices, direct high pressure water jets through the fibers to entangle the fibers and form a cohesive fabric whereby splitting of the fibers can also occur. The hydroentangling apparatus can be constructed in a manner known in the art and as described, for example, in U.S. Pat. No. 3,485,706. Fiber hydroentanglement can be accomplished by jetting liquid (*e.g.,* water), supplied at a pressure from about 1378.95 kPa (200 psig) about 12410,56 kPa (1800 psig) or greater to form fine, essentially columnar, liquid streams. The high pressure streams are directed toward at least one surface of the fibers. The fibers can pass through the hydraulic entangling apparatus one or more times for hydraulic entanglement on one or both sides of the fibers or to provide any desired degree of hydroentanglement.

In needlepunching, the fibers are directed to needle punching apparatus, as known in the art, typically comprising a set of parallel needle boards positioned above and below the fibers. Barbed needles are set in a perpendicular manner in the needle boards. During operation, the needle boards move towards and away from each other in a cyclical fashion, forcing the barbed needles to punch into the fibers and withdraw causing the fibers to move in relation to each other and entangle whereby splitting can occur.

Further, blending of the multicomponent fiber with the monocomponent fiber can comprise carding as described above, air-laying and/or wet-laying. Typically, the air-laying process (also known as dry-laying) comprises dispersing the fibers into a fast moving air stream and condensing them onto a moving screen by means of pressure or vacuum. In the wet-laying process, fibers can be suspended in water to obtain a uniform distribution. As the fiber and water suspension, or "slurry", flows onto a moving wire screen, the water passes through, leaving the fibers randomly laid in a uniform web. Additional water is then squeezed out of the web and the remaining water is removed by drying.

Additionally or alternatively, the method of preparing the filter medium may further comprise bonding the multicomponent fiber with the monocomponent fiber. Suitable methods of bonding include, but are not limited to as mechanical bonding, thermal bonding, and chemical bonding. Examples of mechanical bonding include, but are not limited to hydroentanglement and needle punching, both as described above. In thermal bonding, heat and/or pressure are applied to the fibers. Examples of thermal bonding include but are not limited to air heating and calendering.

Additionally or alternatively, the method of preparing the filter medium may further comprise adding adhesives, binder fibers and/or resins, both as described above. The addition of adhesives, binder fibers and/or resins may be determined based upon the type fluid to be filtered through the filter medium. For example, if the filter medium is for oil or air filtration, additional binder fibers and/or resin may not be needed. On the other hand, if the filter medium is for fuel filtration, additional adhesives, binder fibers and/or resin may be included as necessary.

### EXAMPLES

The following examples are merely illustrative, and do not limit this disclosure in any way.

### Example 1-Lubricating Oil Filter Test

The filtration efficiency for each of the following filter medium compositions in Table 1 below was determined according to International Standard ISO 4548-12, where the test fluid was oil with an amount of added dust.

**Table 1**

| **Filter Medium** | **Monocomponent Fiber Ratio** (wt%) | **Bicomponent Fiber Ratio (wt%)** | **Basis Weight (qsm)** |
|---|---|---|---|
| Flat Sheet#1 | 50 | 50 | 80 |
| Flat Sheet#4 | 25 | 75 | 100 |
| Flat Sheet#5 | 25 | 75 | 200 |

For all the filter medium compositions in Table 1, the monocomponent fibers comprised PET and the bicomponent fiber comprised PET and nylon. The monocomponent fibers were obtained from Barnet. The bicomponent fibers comprised ∼45 wt% nylon and ∼55 wt% PET and had an islands-in-the-sea configuration. The monocomponent and bicomponent fibers had a lengh of 2.54 - 7.62 cm (1 - 3 inches) inches, particularly ∼51 mm. The monocomponent fibers had a diameter of ∼10 µm. The bicomponent fibers were split into first component and second component fibers having diameters of ∼1 µm to ∼3 µm. The filter medium compositions were made by blending the monocomponent and bicomponent fibers in the ratios provided in Table 1 and then providing those blends to a carding machine for web formation of the filter medium compositions. During web formation, different basis weight was acquired for each composition by changing the machine setting and web collector speed.

### Example 1a-Flat Sheet#1

The operating conditions for Flat Sheet#1 are shown in Table 2 below.

**Table 2**

| 39.38°C = 102.8°F | | | | |
|---|---|---|---|---|
| **Operating Conditions** | | | | |
| **Test Fluid** | Type: | Mil-H-5606 | Viscosity: | 15 (mm²/s) |
| | Conductivity: | 1880 (pS/m) | Average Temperature: | 102.8 (°F) |
| **Test Dust** | Type: | ISOMTD | | |
| **Injection System** | Dust Added: | 8.59 (g) | Injection Gravimetric Initial: | 63.6 (mg/L) |
| | Volume: | 135 (L) | Injection Gravimetric Final: | 63.6 (mg/L) |
| | Injection | | Injection Gravimetric Avg: | 63.6 (mg/L) |
| | flowrate: | 250 (mL/minute) | | |
| **Test System** | Flowrate: | 0.42 (GPM) | Initial Cleanliness: | 0.8 (#> 10 µm/mL) |
| | Volume: | 6.0 (L) | BUGL*: | 10.0 (mg/L) |
| | Final Volume: | 6.0 (L) | Final concentration level: | 18.2 (mg/L) |
| **Sampling System** | Sensor type: | On-line | Sample Time: | 60 (s) |
| | Flowrate: | 25 (mL/minute) | Hold Time: | 0 (s) |
| | Counting method: | Optical | Sampling Time: | 1.00 (minute) |
| | | | | |
| | Upstream Dilution Ratio: | 9 | Total records read: | 70 |
| | | | | |
| | Downstream Dilution Ratio: | 9 | Number records to average: | 68 |
| | | | | |

| | | | | |
|---|---|---|---|---|
| (BUGL* stands for basic upstream gravimetric level) | | | | |

The test results for FlatSheet#1 are shown below in Tables 3 and 4.

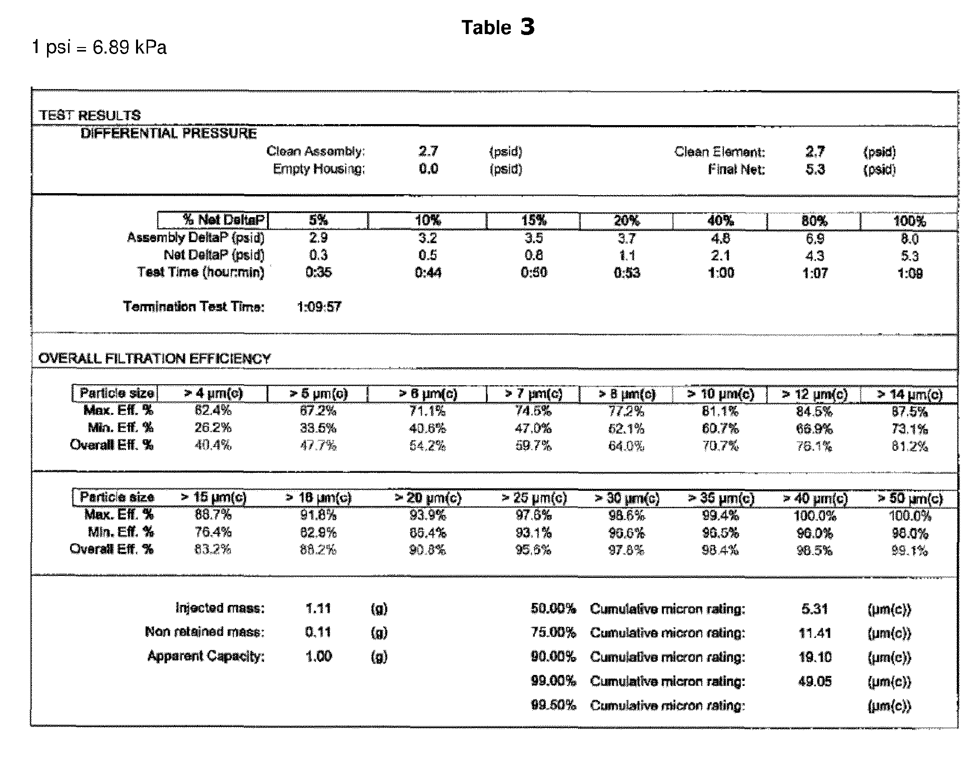

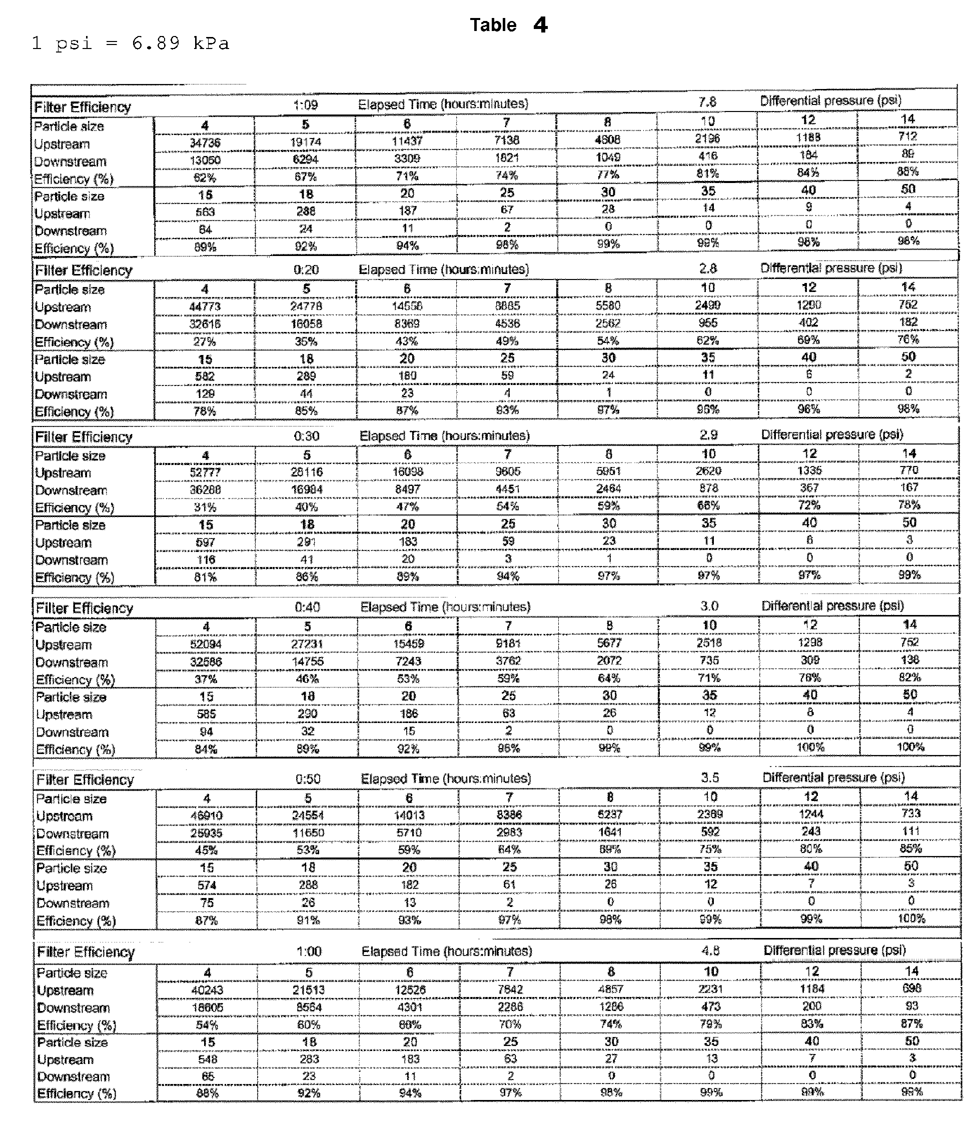

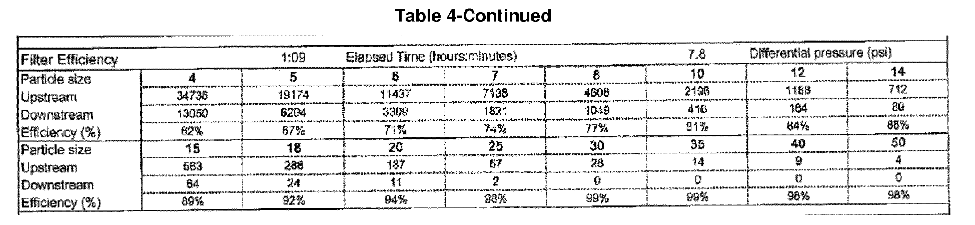

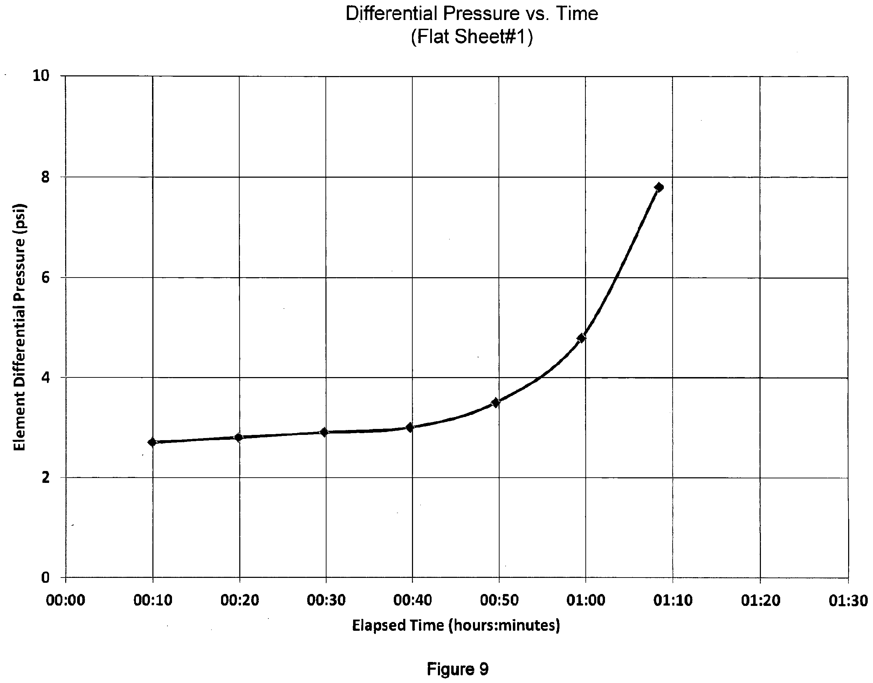

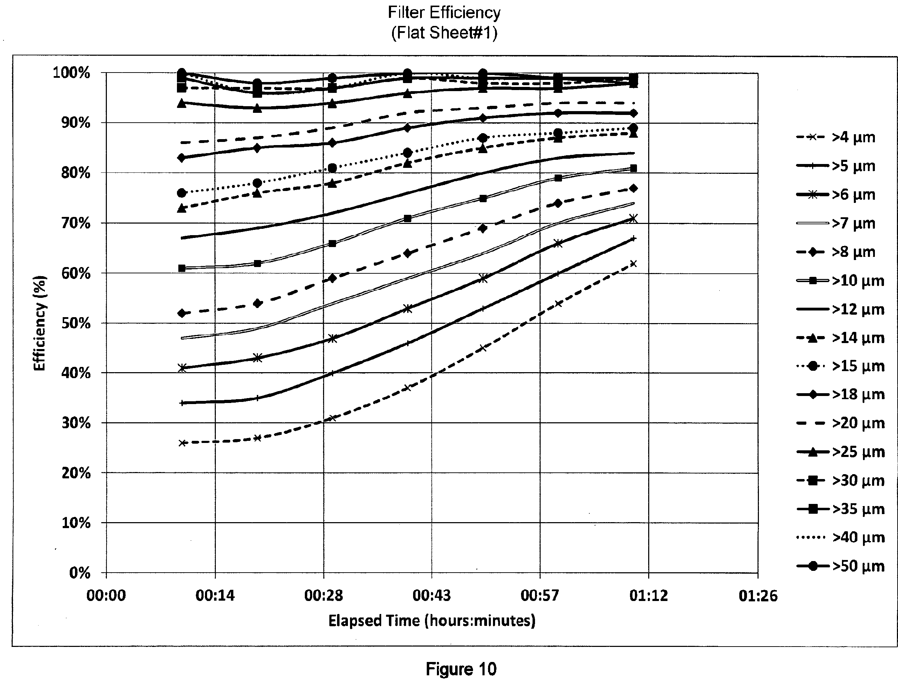

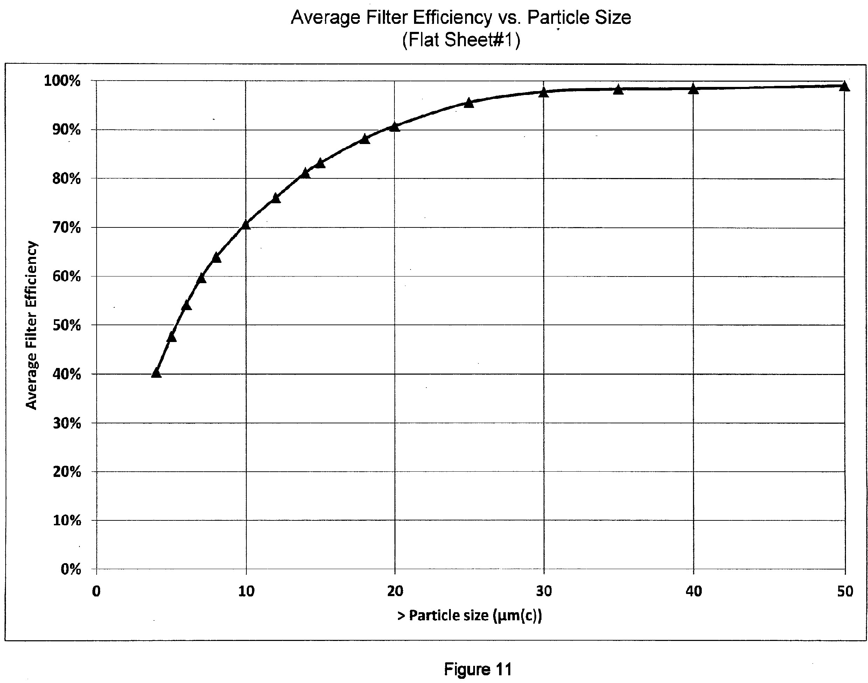

A graph illustrating differential pressure vs. time during the testing is shown in Figure 9. A graph illustrating filter efficiency vs. time for each particle size is shown in Figure 10. A graph illustrating average filter efficiency vs. particle size is shown in Figure 11.

### Example 1b-Flat Sheet#4

The operating conditions for Flat Sheet#4 are shown in Table 5 below.

**Table 5 39.38°C= 102.9°F**

| **Operating Conditions** | | | | |
|---|---|---|---|---|
| **Test Fluid** | Type: | Mil-H-5606 | Viscosity: | 15 (mm²/s) |
| | Conductivity: | 1370 (pS/m) | Average Temperature: | 102.9 (°F) |
| Test Dust | Type: | ISOMTD | | |
| Injection System | Dust Added: | 7.63 (g) | Injection Gravimetric Initial: | 63.6 (mg/L) |
| | Volume: | 120 (L) | Injection Gravimetric Final: | 63.6 (mg/L) |
| | Injection flowrate: | 250 (mL/minute) | Injection Gravimetric Avg: | 63.6 (mg/L) |
| Test System | Flowrate: | 0.42 (GPM) | Initial Cleanliness: | 2.6 (#> 10 µm/mL) |
| | Volume: | 6.0 (L) | BUGL*: | 10.0 (mg/L) |
| | Final Volume: | 6.0 (L) | Final concentration level: | 16.9 (mg/L) |
| Sampling System | Sensor type: | On-line | Sample Time: | 60 (s) |
| | Flowrate: | 25 (mL/minute) | Hold Time: | 0 (s) |
| | Counting method: | Optical | Sampling Time: | 1.00 (minute) |
| | Upstream Dilution Ratio: | 9 | Total records read: | 60 |
| | Downstream Dilution Ratio: | 9 | Number records to average: | 57 |

The test results for FlatSheet#4 are shown below in Tables 6 and 7.

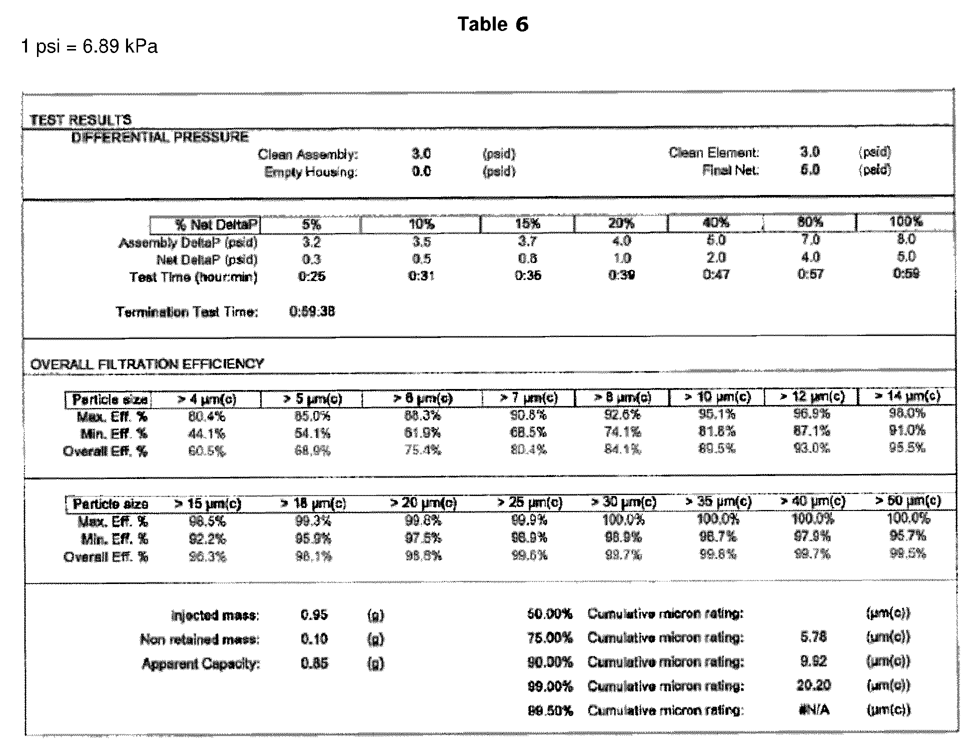

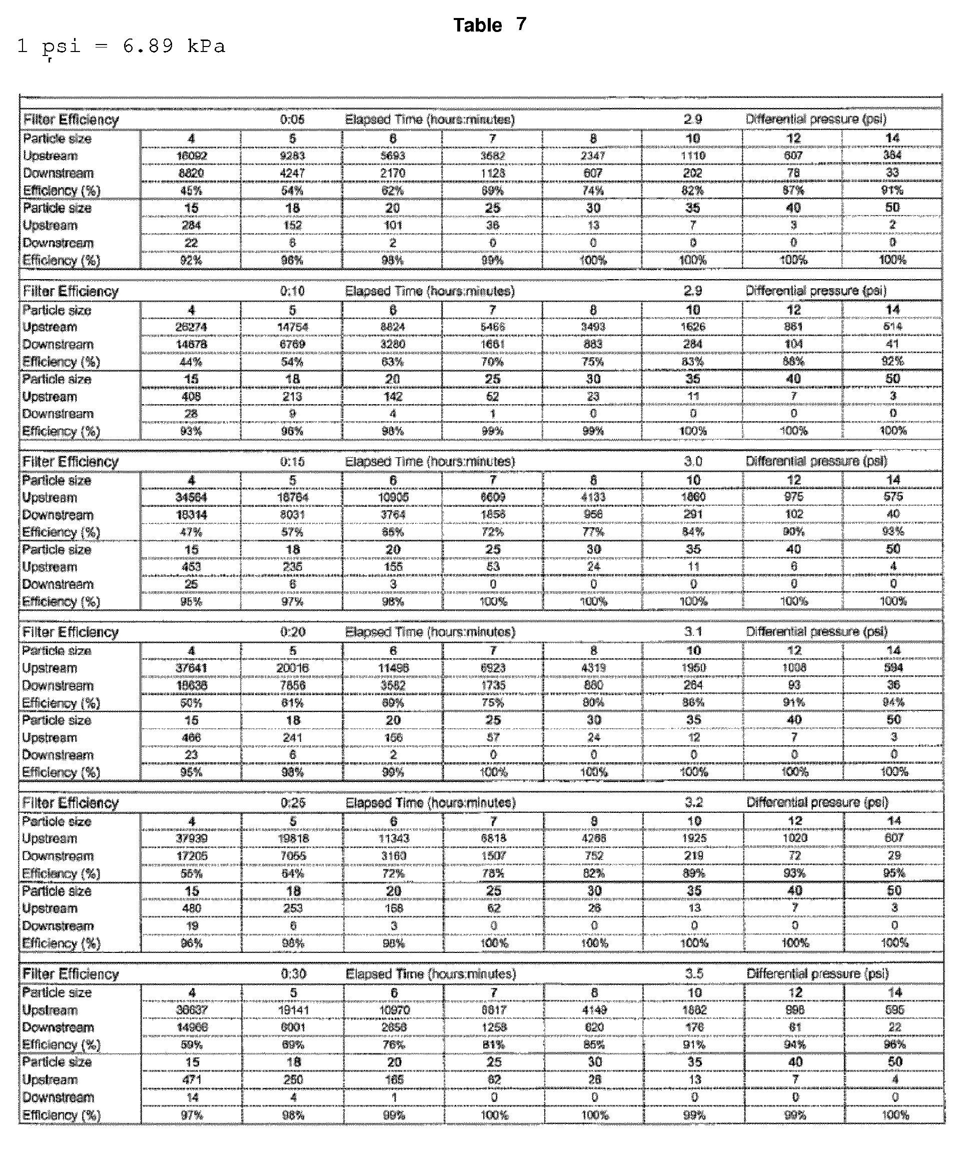

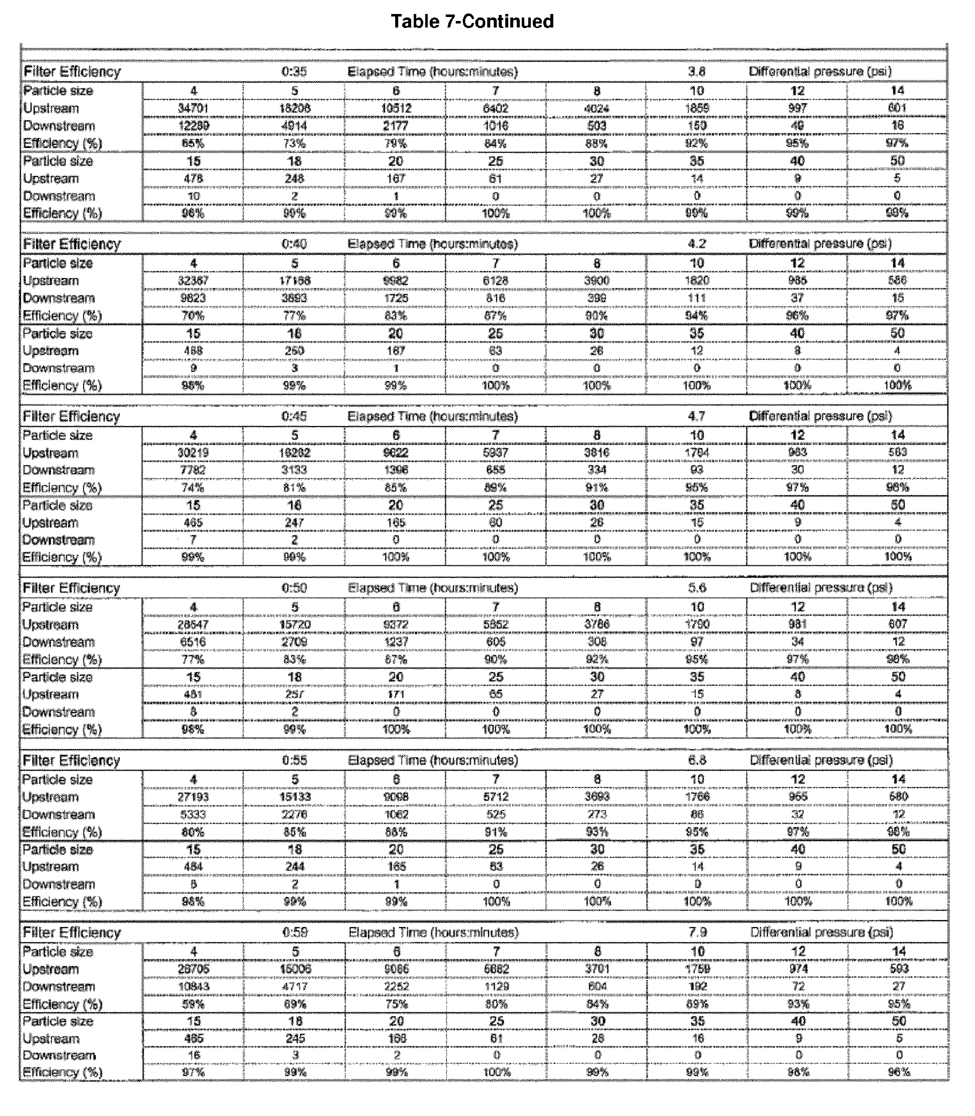

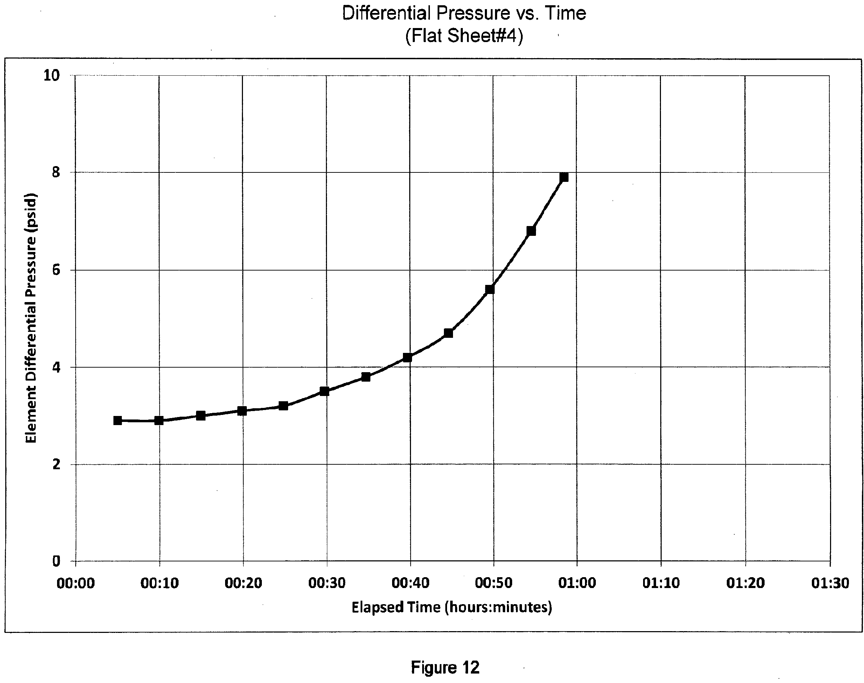

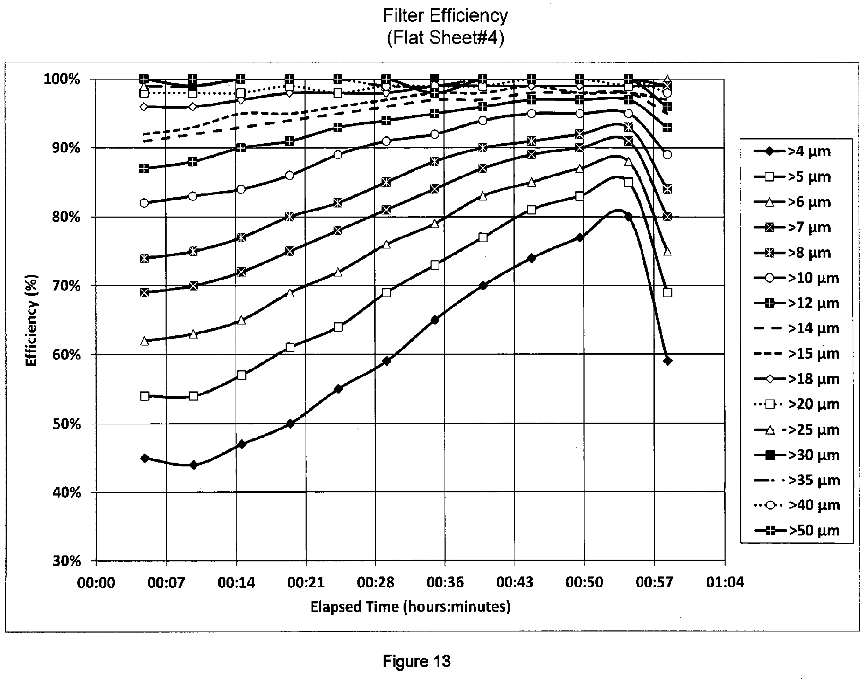

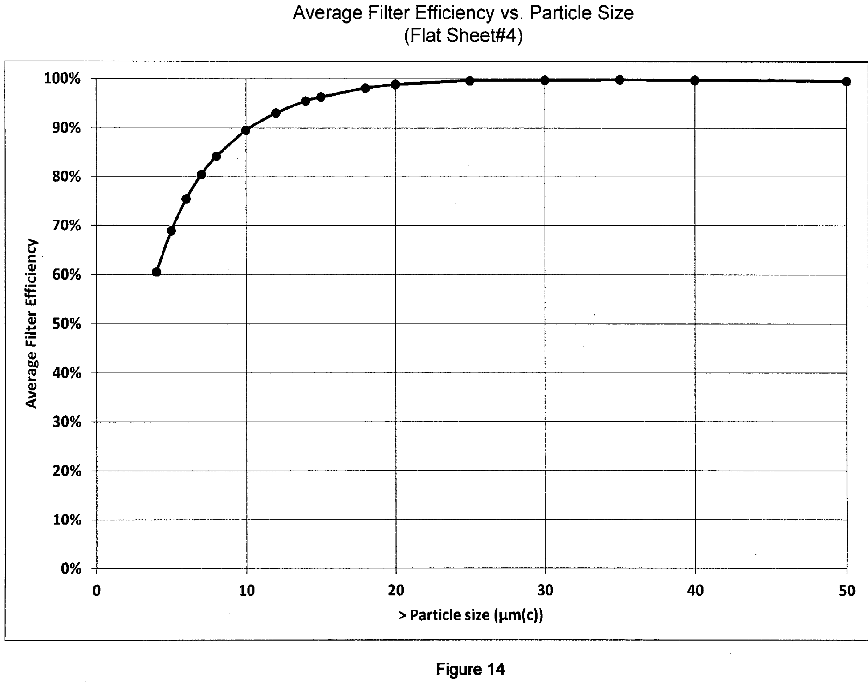

A graph illustrating differential pressure vs. time during the testing is shown in Figure 12. A graph illustrating filter efficiency vs. time for each particle size is shown in Figure 13. A graph illustrating average filter efficiency vs. particle size is shown in Figure 14.

### Example 1c-Flat Sheet#5

The operating conditions for Flat Sheet#5 are shown in Table 8 below.

**Table 8**

| 39.38°C=102.9°F | | | | |
|---|---|---|---|---|
| **Operating Conditions** | | | | |
| **Test Fluid** | Type: | Mil-H-5606 | Viscosity: | 15 (mm²/s) |
| | Conductivity: | 1750 (pS/m) | Average Temperature: | 102.9 (°F) |
| **Test Dust** | Type: | ISOMTD | | |
| **Injection System** | Dust Added: | 8.59 (g) | Injection Gravimetric Initial: | 63.6 (mg/L) |
| | Volume: | 135 (L) | Injection Gravimetric Final: | 63.6 (mg/L) |
| | Injection flowrate: | 250 (mL/minute) | Injection Gravimetric Avg: | 63.6 (mg/L) |
| **Test System** | Flowrate: | 0.42 (GPM) | Initial Cleanliness: | 2.8 (#> 10 µm/mL) |
| | Volume: | 6.0 (L) | BUGL*: | 10.0 (mg/L) |
| | Final Volume: | 6.0 (L) | Final concentration level: | 8.4 (mg/L) |
| **Sampling System** | Sensor type: | On-line | Sample Time: | 60 (s) |
| | Flowrate: | 25 (mL/minute) | Hold Time: | 0 (s) |
| | Counting method: | Optical | Sampling Time: | 1.00 (minute) |
| | Upstream Dilution Ratio: | 9 | Total records read: | 76 |
| | Downstream Dilution Ratio: | 9 | Number records to average: | 73 |

The test results for FlatSheet#5 are shown below in Tables 9 and 10.

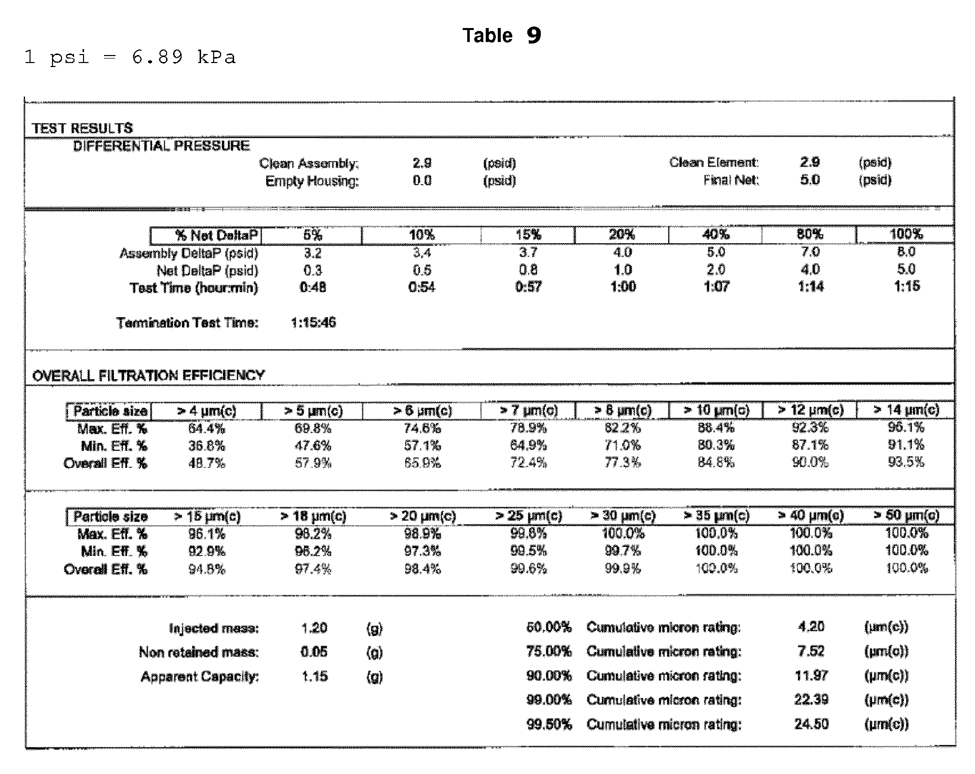

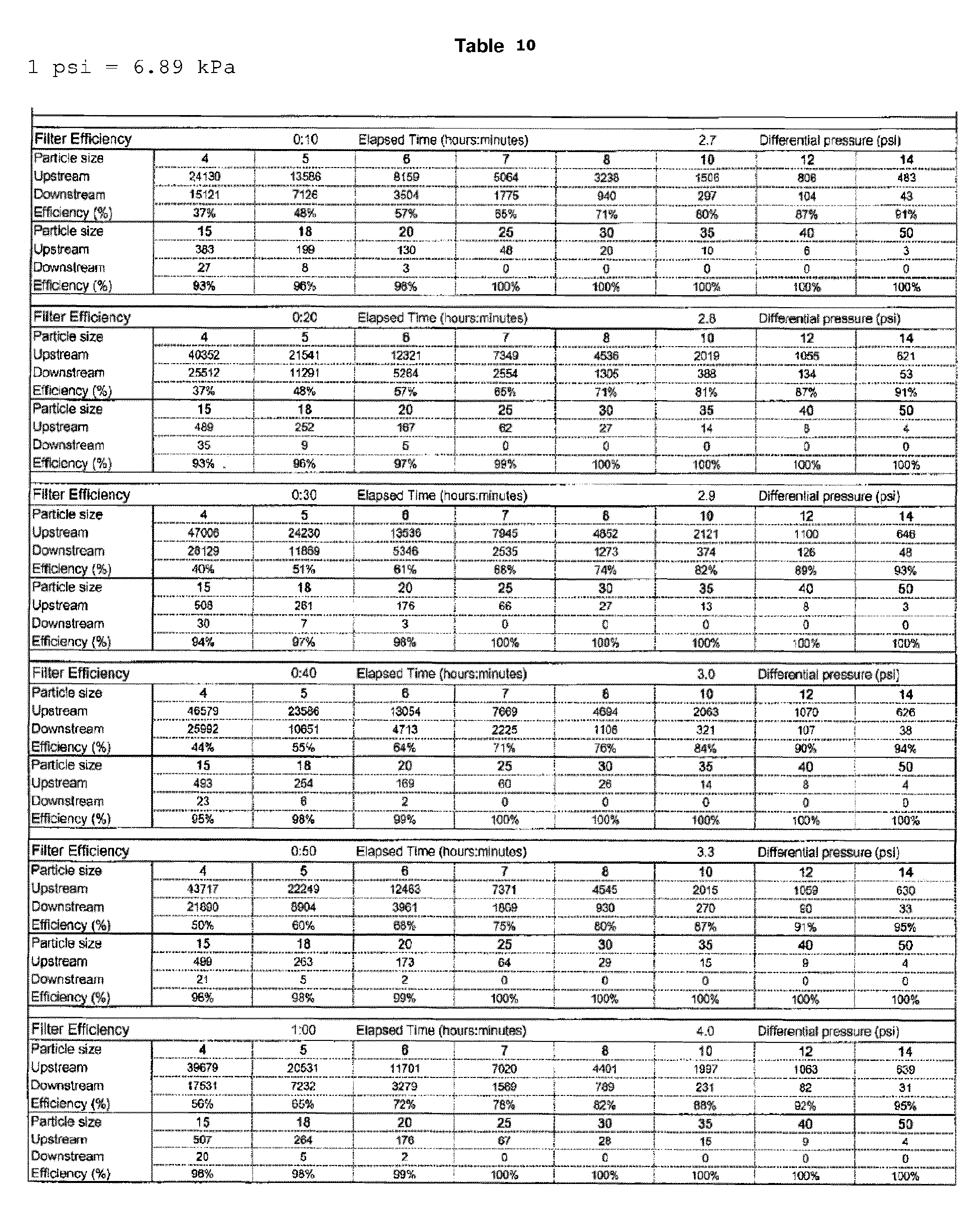

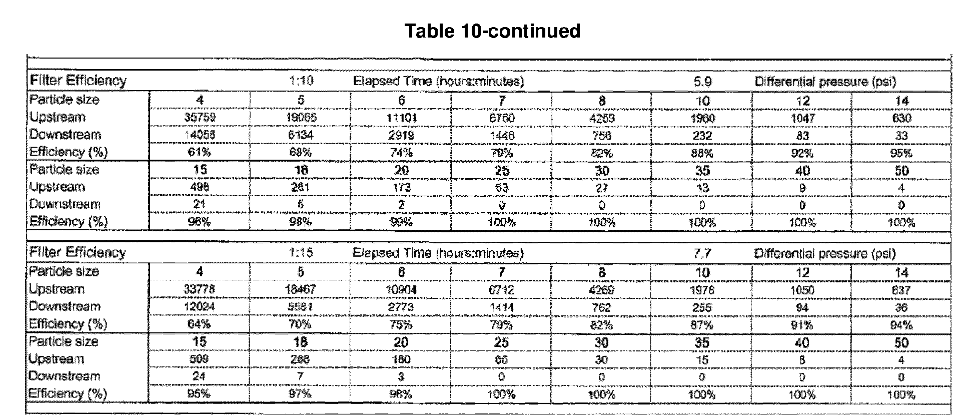

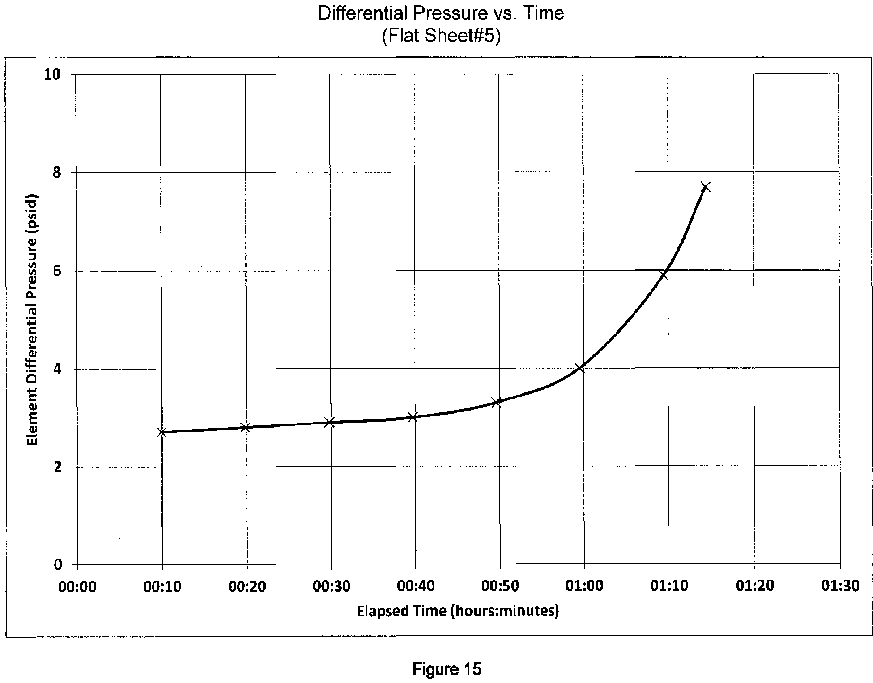

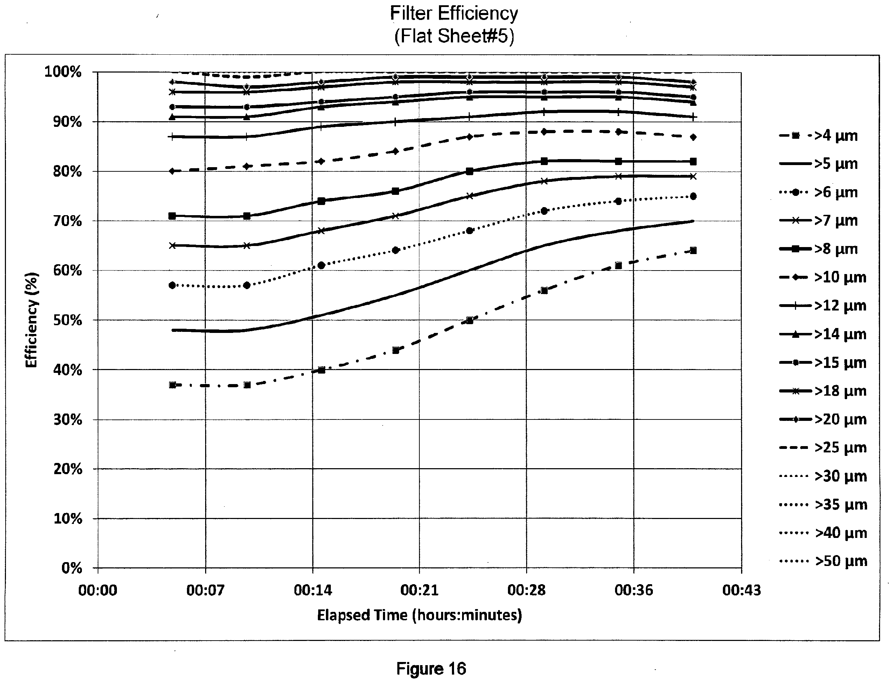

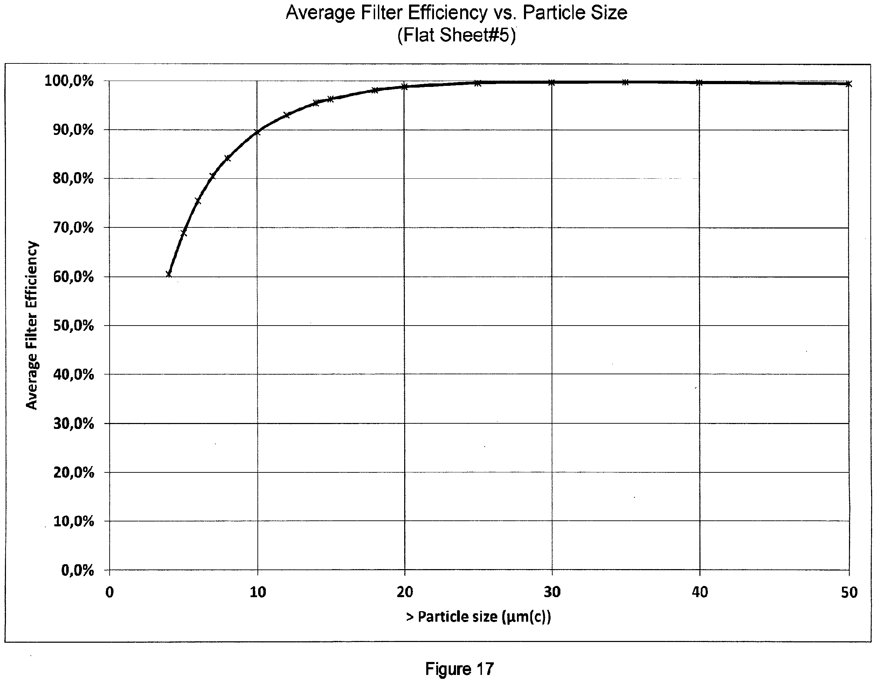

A graph illustrating differential pressure vs. time during the testing is shown in Figure 15. A graph illustrating filter efficiency vs. time for each particle size is shown in Figure 16. A graph illustrating average filter efficiency vs. particle size is shown in Figure 17.

A summary of the tests results are provided in Table 11 below.

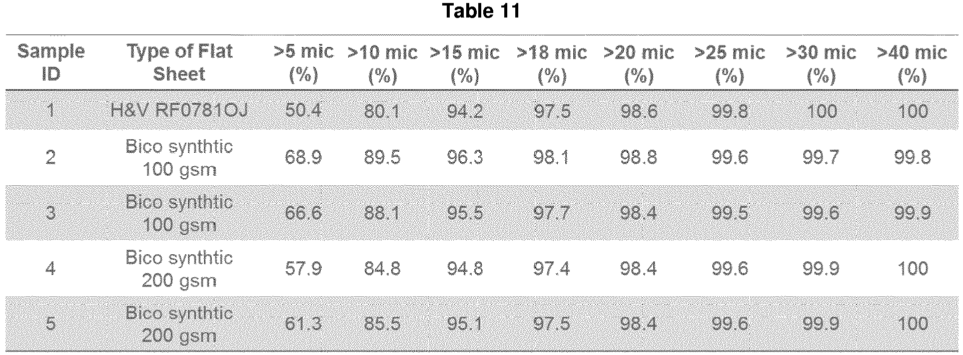

In Table 11, Sample ID 1 corresponds to a comparative glass media composition obtained from Hollingsworth & Vose; Sample IDs 2 and 3 correspond to Flat Sheet#4; and Sample IDs 4 and 5 correspond to Flat Sheet#5. As shown above in Table 11, the filter medium compositions surprisingly demonstrated high filter efficiency with various size particles. Such results indicate that the filter medium compositions can perform comparably or better than traditional glass media when compared with Sample ID 1. The filter medium compositions also do not have the disadvantage of fiber shedding, which is beneficial in the various industries, such as the automotive industry.

## Claims

1. A filter medium comprising: a splittable multicomponent fiber, capable of splitting with a mechanical force into a first split component and a second split component, wherein at least a portion of the splittable multicomponent fiber is present in the filter medium in split form, the first split component having a diameter of less than or equal to 2 µm and the second split component having a diameter of 1 µm to 5 µm; and a monocomponent fiber having a diameter of greater than or equal to 5 µm, wherein the splittable multicomponent fiber and the monocomponent fiber are present as a mixture and wherein the splittable multicomponent fiber has a finite length of less than or equal to 7.62 cm (3 inches).

2. The filter medium of claim 1, wherein the splittable multicomponent fiber and/or the monocomponent fiber is present in the filter medium in amount of 10-90 wt%.

3. The filter medium of claim 1, wherein the first and/or second split component is present in a weight ratio of 10-90% of the splittable multicomponent fiber.

4. The filter medium of claim 1, wherein the first split component and the second split component comprise a material independently selected from the group consisting of a polymeric material, in particular a a polyolefin, a polyester, a polyamide, a polyacrylate, and a vinyl polymer, a ceramic material, titania, glass, alumina and silica.

5. The filter medium of claim 1, wherein the first split component comprises nylon and/or the second split component comprises polyester.

6. The filter medium of claim 1, wherein the monocomponent fiber comprises a material selected from the group consisting of a polymeric material, in particular polyester, a ceramic material, titania, glass, alumina and silica.

7. The filter medium of claim 1, wherein the monocomponent fiber has length of less than or equal to 7.62 cm (3 inches).

8. The filter medium of claim 1, wherein the filter medium has a weight basis of 50 gsm to 300 gsm.

9. The filter medium of claim 1, wherein the splittable multicomponent fiber has a split ratio of at least 10%.

10. A method of preparing the filter medium of claim 1 comprising: blending the splittable multicomponent fiber with the monocomponent fiber; and mechanically splitting the splittable multicomponent fiber into the first split component and the second split component, wherein wherein the splittable multicomponent fiber has a finite length, in particular less than or equal to 7.62 cm (3 inches).

11. The method of claim 10, wherein blending the splittable multicomponent fiber with the monocomponent fiber comprises carding, air-laying and/or wet-laying.

12. The method of claim 10, further comprising bonding the multicomponent fiber with the monocomponent fiber.

13. The method of claim 12, wherein bonding the multicomponent fiber with the monocomponent fiber comprises needlepunching and/or hydroentangling.

14. The method of claim 10, further comprising adding a binder fiber and/or resin.

## Patentansprüche

1. Filtermedium umfassend: eine splittbare Mehrkomponentenfaser, geeignet zum Splitten mit einer mechanischen Kraft in eine erste gesplittete Komponente und eine zweite gesplittete Komponente, wobei sich mindestens ein Teil der splittbaren Mehrkomponentenfaser in gesplitteter Form in dem Filtermedium befindet, und die erste gesplittete Komponente hat einen Durchmesser kleiner als oder gleich 2 µm und die zweite gesplittete Komponente hat einen Durchmesser von 1 µm bis 5 µm; und eine Einkomponentenfaser hat einen Durchmesser größer als oder gleich 5 µm, wobei die splittbare Mehrkomponentenfaser und die Einkomponentenfaser als Mischung vorliegen und wobei die splittbare Mehrkomponentenfaser eine begrenzte Länge von weniger als oder gleich 7,62 cm (3 Zoll) hat.

2. Filtermedium nach Anspruch 1, wobei die splittbare Mehrkomponentenfaser und/oder die Einkomponentenfaser in dem Filtermedium in einer Menge von 10-90 Gew.-% vorliegt.

3. Filtermedium nach Anspruch 1, wobei die erste und/oder zweite gesplittete Komponente in einem Gewichtsverhältnis von 10-90 % der splittbaren Mehrkomponentenfaser vorliegt.

4. Filtermedium nach Anspruch 1, wobei die erste gesplittete Komponente und die zweite gesplittete Komponente ein Material umfassen, welches unabhängig aus der Gruppe ausgewählt wurde, die aus einem polymerischen Material besteht, insbesondere einem Polyolefin, einem Polyester, einem Polyamid, einem Polyacrylat und einem Vinylpolymer, einem Keramikmaterial, Titan, Glas, Tonerde und Kieselsäure.

5. Filtermedium nach Anspruch 1, wobei die erste gesplittete Komponente Nylon umfasst und/oder die zweite gesplittete Komponente Polyester umfasst.

6. Filtermedium nach Anspruch 1, wobei die Einkomponentenfaser ein Material umfasst, welches aus der Gruppe ausgewählt wurde, die aus einem polymerischen Material besteht, insbesondere Polyester, einem Keramikmaterial, Titan, Glas, Tonerde und Kieselsäure.

7. Filtermedium nach Anspruch 1, wobei die Einkomponentenfaser eine Länge kleiner als oder gleich 7,62 cm (3 Zoll) hat.

8. Filtermedium nach Anspruch 1, wobei das Filtermedium eine Gewichtsbasis von 50 g/m² bis 300 g/m² hat.

9. Filtermedium nach Anspruch 1, wobei die gesplittete Mehrkomponentenfaser ein Splittverhältnis von mindestens 10 % hat.

10. Verfahren zur Herstellung des Filtermediums nach Anspruch 1 umfassend: Vermischen der splittbaren Mehrkomponentenfaser mit der Einkomponentenfaser; und mechanisches Splitten der splittbaren Mehrkomponentenfaser in die erste gesplittete Komponente und die zweite gesplittete Komponente, wobei die splittbare Mehrkomponentenfaser eine begrenzte Länge, insbesondere kleiner als oder gleich 7,62 cm (3 Zoll) hat.

11. Verfahren nach Anspruch 10, wobei das Vermischen der splittbaren Mehrkomponentenfaser mit der Einkomponentenfaser Kardieren, Luftlegeverfahren und/ oder Nasslegeverfahren umfasst.

12. Verfahren nach Anspruch 10, weiter umfassend das Verbinden der Mehrkomponentenfaser mit der Einkomponentenfaser.

13. Verfahren nach Anspruch 12, wobei das Verbinden der Mehrkomponentenfaser mit der Einkomponentenfaser Vernadelung und/oder Wasserstrahlverfestigung umfasst.

14. Verfahren nach Anspruch 10, ferner umfassend die Zugabe einer Bindemittelfaser und/oder eines Bindemittelharzes.

## Revendications

1. Milieu filtrant comprenant: une fibre multicomposant fractionnable, capable de se fractionner avec une force mécanique en un premier composant fractionné et un second composant fractionné, dans lequel au moins une partie de la fibre multicomposant fractionnable est présente dans le milieu filtrant sous forme fractionnée, le premier composant fractionné ayant un diamètre inférieur ou égal à 2 µm et le second composant fractionné ayant un diamètre de 1 µm à 5 µm; et une fibre monocomposant ayant un diamètre supérieur ou égal à 5 µm, dans lequel la fibre multicomposant fractionnable et la fibre monocomposant sont présentes en tant que mélange et dans lequel la fibre multicomposant fractionnable a une longueur finie inférieure ou égale à 7,62 cm (3 pouces).

2. Milieu filtrant selon la revendication 1, dans lequel la fibre multicomposant fractionnable et/ou la fibre monocomposant est présente dans le milieu filtrant en une quantité de 10 à 90 % en poids.

3. Milieu filtrant selon la revendication 1, dans lequel le premier et/ou le second composant fractionné est présent dans un rapport pondéral de 10 à 90 % de la fibre multicomposant fractionnable.

4. Milieu filtrant selon la revendication 1, dans lequel le premier composant fractionné et le second composant fractionné comprennent un matériau indépendamment choisi dans le groupe constitué d'un matériau polymère, notamment une polyoléfine, un polyester, un polyamide, un polyacrylate, et un polymère vinylique, un matériau céramique, de l'oxyde de titane, du verre, de l'alumine et de la silice.

5. Milieu filtrant selon la revendication 1, dans lequel le premier composant fractionné comprend du nylon et/ou le second composant fractionné comprend du polyester.

6. Milieu filtrant selon la revendication 1, dans lequel la fibre monocomposant comprend un matériau choisi dans le groupe constitué d'un matériau polymère, notamment du polyester, un matériau céramique, de l'oxyde de titane, du verre, de l'alumine et de la silice.

7. Milieu filtrant selon la revendication 1, dans lequel la fibre monocomposant a une longueur inférieure ou égale à 7,62 cm (3 pouces).

8. Milieu filtrant selon la revendication 1, dans lequel le milieu filtrant a une base pondérale de 50 g/m² à 300 g/m².

9. Milieu filtrant selon la revendication 1, dans lequel la fibre multicomposant fractionnable a un rapport de fractionnement d'au moins 10 %.

10. Procédé de préparation du milieu filtrant selon la revendication 1 comprenant : le mélange de la fibre multicomposant fractionnable avec la fibre monocomposant; et le fractionnement mécanique de la fibre multicomposant fractionnable en le premier composant fractionné et le second composant fractionné, dans lequel la fibre multicomposant fractionnable a une longueur finie, notamment inférieure ou égale à 7,62 cm (3 pouces).

11. Procédé selon la revendication 10, dans lequel le mélange de la fibre multicomposant fractionnable avec la fibre monocomposant comprend un cardage, un dépôt en voie sèche et/ou un dépôt en voie humide.

12. Procédé selon la revendication 10, comprenant en outre la liaison de la fibre multicomposant avec la fibre monocomposant.

13. Procédé selon la revendication 12, dans lequel la liaison de la fibre multicomposant avec la fibre monocomposant comprend un aiguilletage et/ou un enchevêtrement hydraulique.

14. Procédé selon la revendication 10, comprenant en outre l'ajout d'une fibre de liaison et/ou d'une résine de liaison.
